(19) Europäisches Patentamt
European Patent Office
Office européen des brevets

(11) Publication number: **0 097 295 B1**

(12) **EUROPEAN PATENT SPECIFICATION**

(45) Date of publication of patent specification: **07.01.87**

(51) Int. Cl.⁴: **G 01 T 1/202,** C 09 K 11/78

(21) Application number: **83105747.6**

(22) Date of filing: **11.06.83**

(54) **Rare earth doped yttria-gadolinia ceramic scintillators and methods for making.**

(30) Priority: **18.06.82 US 389815**
**18.06.82 US 389814**
**18.06.82 US 389830**
**18.06.82 US 389829**

(43) Date of publication of application:
**04.01.84 Bulletin 84/01**

(45) Publication of the grant of the patent:
**07.01.87 Bulletin 87/02**

(84) Designated Contracting States:
**DE FR GB NL**

(56) References cited:
**GB-A- 792 071**
**US-A-3 640 887**
**US-A-4 040 845**
**MATERIALS RES. BULL., vol. 7, July 1972, pages 647-654, Pergamon Press, Inc., USA, E. CARNALL et al.: "Transparent Gd203 ceramics and phosphors"**
**AMERICAN CERAMIC SOCIETY BULLETIN, vol. 52, no. 5, May 1973, pages 473-478, USA, C. GRESKOVICH et al.: "Fabrication of transparent Th02-doped Y203"**

(73) Proprietor: **GENERAL ELECTRIC COMPANY**
**1 River Road**
**Schenectady New York 12305 (US)**

(72) Inventor: **Cusano, Dominic Anthony**
**2017 Morrow Avenue**
**Schenectady New York 12309 (US)**
Inventor: **Greskovich, Charles David**
**1229 Viewmont Drive**
**Schenectady New York 12309 (US)**
Inventor: **DiBianca, Frank Anthony**
**818 Shady Lawn Road**
**Chapel Hill North Carolina 27514 (US)**

(74) Representative: **Catherine, Alain et al**
**General Electric - Deutschland Munich Patent Operations Frauenstrasse 32**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 097 295 B1

**Description**

The present invention relates to rare-earth doped ceramic scintillators for computerized tomography (CT) and other x-ray, gamma radiation, and nuclear radiation detecting applications. More specifically, the invention relates to rare-earth-doped, polycrystalline, yttria/gadolinia ($Y_2O_3$/$Gd_2O_3$) ceramic scintillators.

Computerized tomography scanners are medical diagnostic instruments in which the subject is exposed to a relatively planar beam or beams of x-ray radiation, the intensity of which varies in direct relationship to the energy absorption along a plurality of subject body paths. By measuring the x-ray intensity (i.e., the x-ray absorption) along these paths from a plurality of different angles or views, an x-ray absorption coefficient can be computed for various areas in any plane of the body through which the radiation passes. These areas typically comprise approximately a square portion of about 1 mm×1 mm. The absorption coefficients are used to produce a display of, for example, the bodily organs intersected by the x-ray beam.

An integral and important part of the scanner is the x-ray detector which receives the x-ray radiation which has been modulated by passage through the particular body under study. Generally, the x-ray detector contains a scintillator material which, when excited by the impinging x-ray radiation, emits optical wavelength radiation. In typical medical or industrial CT applications, the optical output from the scintillator material is made to impinge upon photoelectrically responsive materials in order to produce electrical output signals, the amplitude of which is directly related to the intensity of the impinging x-ray radiation. The electrical signals are digitized for processing by digital computer means which generates the absorption coefficients in a form suitable for display on a cathode ray tube screen or other permanent media.

Due to the specific and demanding computerized tomography requirements, not all scintillator materials which emit optical radiation upon excitation by x-ray or gamma ray radiation are suitable for CT applications. Useful scintillators must be efficient converters of x-ray radiation into optical radiation in those regions of the electromagnetic spectrum (visible and near visible) which are most efficiently detected by photosensors such as photomultipliers or photodiodes. It is also desirable that the scintillator transmit the optical radiation efficiently, avoiding optical trapping, such that optical radiation originating deep in the scintillator body escapes for detection by externally situated photodetectors. This is particularly important in medical diagnostic applications where it is desirable that x-ray dosage be as small as possible to minimize patient exposure, while maintaining adequate quantum detection efficiency and a high signal-to-noise ratio.

Among other desirable scintillator material properties are short afterglow or persistence, low hysteresis, high x-ray stopping power, and spectral linearity. Afterglow is the tendency of the scintillator to continue emitting optical radiation for a time after termination of x-ray excitation, resulting in blurring, with time, of the information-bearing signal. Short afterglow is also highly desirable in applications requiring rapid sequential scanning such as, for example, in imaging moving bodily organs. Hysteresis is the scintillator material property whereby the optical output varies for identical x-ray excitation based on the radiation history of the scintillator. This is undesirable due to the requirement in CT for repeated precise measurements of optical output from each scintillator cell and where the optical output must be substantially identical for identical x-ray radiation exposure impinging on the scintillator body. Typical detecting accuracies are on the order of one part in one thousand for a number of successive measurements taken at relatively high rate. High x-ray stopping power is desirable for efficient x-ray detection. Spectral linearity is another important scintillator material property because x-rays impinging thereon have different frequencies. Scintillator response must be substantially uniform at all x-ray frequencies.

Among scintillator phosphors considered for CT use are monocrystalline materials such as cesium iodide (CsI), bismuth germanate ($Bi_4Ge_3O_{12}$), cadmium tungstate ($CdWO_4$), and sodium iodide (NaI). Many of the aforementioned materials typically suffer from one or more deficiencies such as excessive afterglow, low light output, cleavage, low mechanical strength, hysteresis, and high cost. Many monocrystalline scintillators are also subject to hygroscopic attack. Known polycrystalline scintillators are efficient and economical. However, due to their polycrystalline nature, such materials are not efficient light propagators and are subject to considerable optical trapping. Internal light paths are extremely long and tortuous, resulting in unacceptable attenuation of optical output.

Fabrication of monocrystalline scintillators from multicomponent powder constituents is typically not economical and is frequently impractical. The multicomponent powder composition must be heated to a temperature above its melting point, and ingots of dimensions larger than those of each detector channel are grown from the melt. Considering the size of the bars required and the temperatures involved, the process is difficult in and of itself. In addition, some materials exhibit phase changes while cooling which would cause the crystals to crack when cooled after the growing process. Furthermore, single crystals tend to be susceptible to the propagation of lattice defects along the crystal planes.

U.S. Patent 4,242,221 describes methods for fabricating polycrystalline phosphors into ceramic-like scintillator bodies for use in CT.

The present invention provides improved ceramic scintillator bodies for use in CT.

The present invention provides improved ceramic scintillators composed of yttria-gadolinia and including a variety of rare earth activators for enhancing luminescent efficiency.

The terms "transparency" and "translucency", as used herein, describe various degrees of optical clarity in the scintillator material. Typically, the inventive scintillator materials exhibit an optical attenuation coefficient of less than 100 $cm^{-1}$, as measured by standard spectral transmittance tests (i.e., "narrow" angle transmission) on a polished scintillator material plate, at the luminescent wavelength of the respective ion. The most desirable scintillator materials have lower attenuation coefficients and hence higher optical clarity (transparency).

The polycrystalline ceramic scintillators of the present invention include between 5 and 50 mole percent $Gd_2O_3$ at least one rare-earth activator oxide selected from the group consisting of $Eu_2O_3$, $Nd_2O_3$, $Yb_2O_3$, $Dy_2O_3$, $Tb_2O_3$ and $Pr_2O_3$, at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent, and at least one light output restorer selected from the group consisting of CaO and SrO, the remainder being $Y_2O_3$.

The invention further relates to methods for preparing an yttria-gadolinia ceramic scintillator. A first method includes the steps of preparing a multicomponent powder including $Y_2O_3$, $Gd_2O_3$, and at least one rare-earth activator oxide selected from the group consisting of $Eu_2O_3$, $Nd_2O_3$, $Yb_2O_3$, $Dy_2O_3$, $Tb_2O_3$ and $Pr_2O_3$. The powder also includes at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent, as well as at least one light output restorer selected from the group consisting of CaO and SrO. The multicomponent powder is pressed to form powder compacts which are sintered to the closed porosity stage. The sintered compacts ars then gas hot isostatically pressed at elevated temperature to form the polycrystalline ceramic scintillator body.

Another method includes the steps of preparing a multicomponent powder containing between 5 and 50 mole percent $Gd_2O_3$ and between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$ and $Pr_2O_3$. The powder also includes at least one transparency promoter selected from the group consisting of $ThO_2$ in an amount up to 0.7 mole percent $ZrO_2$ in an amount up to 0.7 mole percent and $Ta_2O_5$ in an amount up to 0.5 mole percent, as well as at least one light output restorer selected from the group consisting of CaO and SrO. The remainder of the multicomponent powder is $Y_2O_3$. The multicomponent powder is pressed under vacuum at a first temperature and pressure. The temperature and pressure are then increased and maintained so as to form the polycrystalline ceramic scintillator body.

Yet another method includes the steps of preparing a multicomponent powder containing between 5 and 50 mole percent $Gd_2O_3$ and between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$ and $Pr_2O_3$. The powder also includes at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent, as well as at least one light output restorer selected from the group consisting of CaO and SrO. The remainder of the multicomponent powder is $Y_2O_3$. The multicomponent powder is cold pressed to form powder compacts which are sintered to form the yttria-gadolinia ceramic scintillator body.

It is an object of the invention to provide polycrystalline yttria-gadolinia ceramic scintillators having high x-ray stopping power and high radiant efficiency.

It is another object of the invention to provide rare-earth-doped, polycrystalline yttria-gadolinia ceramic scintillators having high optical clarity, high density, high uniformity, cubic structure and which are particularly useful in CT and other x-ray detecting applications.

It is still another object of the invention to provide polycrystalline, yttria-gadolinia ceramic scintillators exhibiting low luminescent afterflow and low systeresis.

It is a further object of the invention to provide a sintering and gas hot isostatic pressing process for preparing rare-earth-doped, transparent-to-translucent polycrystalline yttria-gadolinia ceramic scintillators having cubic crystalline structure, high x-ray stopping power, high density, high uniformity, high radiant efficiency and which are useful in radiation detectors such as those used in CT and digital radiography.

It is another object of the invention to provide a sintering process for preparing polycrystalline yttria-gadolinia ceramic scintillators exhibiting low luminescence afterglow.

It is a further object of the invention to provide a vacuum hot pressing process for preparing rare-earth doped, transparent-to-translucent polycrystalline yttria-gadolinia ceramic scintillators having cubic crystalline structure, high x-ray stopping power, high density, high uniformity, high radiant efficiency and which are useful in radiation detectors such as those used in CT and digital radiography.

It is another object of the invention to provide a vacuum hot pressing process for preparing polycrystalline yttria-gadolinia ceramic scintillators exhibiting low luminescence afterglow.

It is yet another object of the invention to provide a sintering process for preparing rare-earth-doped, transparent-to-translucent polycrystalline yttria-gadolinia ceramic scintillators having cubic crystalline structure, high x-ray stopping power, high density, high uniformity, high radiant efficiency and which are useful in radiation detectors such as those used in CT and digital radiography.

The invention itself, however, both as to its organization and method of operation, together with further objects and advantages thereof, may best be understood by reference to the following description taken in conjunction with the accompanying drawings.

Fig. 1 depicts graphically the effect of increased thoria ($ThO_2$) content on the light output and the light output restorative effects of CaO and SrO in a yttria-gadolinia ceramic scintillator containing 3 mole percent $Eu_2O_3$.

Fig. 2 is a graphical illustration of the dependence of relative light output on $Eu_2O_3$ activator concentration in an inventive scintillator material containing 35 mole percent $Gd_2O_3$, the remainder being $Y_2O_3$.

Fig. 3a illustrates graphically the dependence of scintillator efficiency on relative yttria-gadolinia content of an inventive ceramic scintillator containing 3 mole percent $Eu_2O_3$.

Fig. 3b is a graph illustrating 73 keV x-ray stopping power versus yttria-gadolinia compositional ratio of an inventive ceramic scintillator.

Fig. 4 is a graphical illustration of the effect of increased $Yb_2O_3$ concentrations on scintillator material afterglow.

Fig. 5 depicts graphically the relative light output of an inventive scintillator material with increased $Yb_2O_3$ content.

Fig. 6 is a graphical illustration of the effect of increased SrO concentration on scintillator material afterglow.

U.S. Patent 3,640,887, describes the manufacture of transparent polycrystalline ceramic bodies. The bodies include the oxides of thorium, zirconium and hafnium and mixtures thereof with oxides of rare-earth elements 58 through 71 of the Periodic Table. The bodies may optionally include yttria. The average ionic radius of the rare earth oxide, with or without yttria, must not exceed about 0.093 nm, and the difference in ionic sizes of the constituent oxides should not exceed about 0.022 nm. The polycrystalline ceramics are used in high temperature applications and/or in applications requiring light transmission. Exemplary applications include high temperature microscopes, lamp envelopes, laser applications, and furnace windows.

The aforedescribed patent teaches that each polycrystalline ceramic body includes between about 2 to 15 mole percent of thoria ($ThO_2$), zirconia ($ZrO_2$), hafnia ($HfO_2$), or some combination thereof to act as a densifying agent during sintering to promote transparency.

Translucent-to-transparent ceramic scintillator bodies composed of $Y_2O_3 \cdot Gd_2O_3$, and one or more rare-earth activator oxides can be produced without the aid of transparency promoters such as $ThO_2$, $ZrO_2$, $Ta_2O_5$, and SrO. However, the transparency of some yttria-gadolinia ceramic scintillators is improved by the addition of transparency promoters. For example, a test pattern formed on one surface of a scintillator material, including a transparency promoter, approximately 1.5 mm thick can be resolved on the opposite surface of the scintillator material down to 7 line pairs per millimeter. Stated in another way, a series of 0.076 mm (3 mil) line widths can be read through a 1.5 mm thick scintillator material sample. Without the transparency promoter, a 1.5 mm thick sample will barely resolve one line pair per millimeter, or stated differently, a series of 0.5 mm lines will be barely resolved by the 1.5 mm thick scintillator sample. It is apparent, therefore, that the scintillator materials which include transparency promoters have short optical escape paths from within any part of the scintillator body where x-rays are absorbed. Such scintillator materials are particularly desirable for CT use.

Applicants have found, however, that the inclusion of $ThO_2$, $ZrO_2$, or $HfO_2$ in the scintillator materials of the present invention in the quantities specified in the afore-mentioned patent (about 2—15 mole percent) results in a material having greatly reduced light output when excited by high energy radiation such as x-rays, making such materials unsuitable for use in CT. It has also been found that $Ta_2O_5$ also produces a similar reduction in scintillator material light output. These tetravalent ($4^+$) and pentavalent ($5^+$) additive species have an inhibiting effect on light output. It is important to note that light output refers to scintillation resulting from x-ray excitation. This is a significant distinction since some ceramic bodies fluoresce under ultraviolet excitation, but do not scintillate upon x-ray excitation, for example.

Curve H, Fig. 1 illustrates relative light output (vertical axis) of a polycrystalline ceramic composed of about 58.7 mole percent $Y_2O_3$, 38 mole percent gadolinia ($Gd_2O_3$), 3 mole percent $Eu_2O_3$, 0.3 mole percent $Yb_2O_3$, with increasing thoria ($ThO_2$) in mole percent as shown in the horizontal axis. As the quantity of $ThO_2$ is increased, the quantity of $Y_2O_3$ is correspondingly decreased. The average ionic radius of the ceramic constituents and the difference between ionic radii are as specified in US 3,640,887. It is evident from Curve H, that the light output for a material containing 2 mole percent $ThO_2$ (the minimum amount specified by US 3,640,887) is only 5 percent of the light output for the same material without thoria. In fact, the addition of as little as 0.5 mole percent $ThO_2$, well below the lower limit specified in US 3,640,887, reduces the light output to a low value of about 18 percent of that measured for the material without $ThO_2$. In another example (not shown in Fig. 1), the relative light output of a ceramic body containing 56.5 mole percent $Y_2O_3$, 38 mole percent $Gd_2O_3$, 3 mole percent $Eu_2O_3$, 0.5 mole percent $Yb_2O_3$ and 2 mole percent $ZrO_2$ is only 4 percent of the light output of the same material without $ZrO_2$.

It has been discovered by the inventors herein that the light reducing effect due to the addition of $ThO_2$, $ZrO_2$ and $Ta_2O_5$ can be partially reversed by the addition of calcium oxide (CaO) or strontium oxide (SrO). The rejuvenating effect of CaO on the relative light output degraded by the addition of $ThO_2$ is illustrated by Curve K in Fig. 1. The relative light output of a scintillator material having 38.0 mole percent $Gd_2O_3$, 3 mole percent $Eu_2O_3$, 0.3 mole percent $Yb_2O_3$, 0.5 mole percent and the remainder being $Y_2O_3$ was observed to be 18 percent of that of a material without $ThO_2$ (Curve H, Fig. 1). Curve K illustrates the light output restorative effect of CaO in a similar scintillator composition in which the molar ratio of CaO to $ThO_2$ is 2:1. Thus, the light output of a composition including 1.0 percent CaO and 0.5 mole percent $ThO_2$ was restored to about 44 percent of that of a material without $ThO_2$. It is also evident from Curve K that the addition of 4 mole percent CaO to a composition containing 2 mole percent $ThO_2$ increased light output from about 4 percent to about 13 percent.

A light output restorative effect has also been observed for SrO as illustrated by Curve J, Fig. 1, for the scintillator having the above-described composition and a molar ratio of SrO to $ThO_2$ of 2:1. For example, the light output was observed to increase from 18 percent for a material containing 0,5 mole percent $ThO_2$, to about 32 percent for the same material having in addition 1 mole percent SrO.

It has been found that SrO can also function as a transparency promoter in the yttria-gadolinia ceramic scintillator. The preferred mole percentage of SrO when used as a transparency promoter is between 0.1 and 2, and between 0.5 and 3.0 when it is used as a light output restorer. Preferred CaO content is between 0.2 and 4 mole percent.

Transparency promoters $ThO_2$, $ZrO_2$ and $Ta_2O_5$ are useful in quantities of up to 0.7 mole percent, 0.7 mole percent and 0.5 mole percent, respectively. It will be noted on Curve H, Fig. 1, that if the mole percent of $ThO_2$ is kept below about 0.35 mole percent the light output is not severely reduced. Hence, for some x-ray applications where maximum light output is not required, light output restoring additives may not be needed. Similarly if the mole percentages of $ZrO_2$ and $Ta_2O_5$ are maintained below 0,35 and 0.3, respectively, light output restoring additives are unnecessary.

The oxides of rare-earth elements europium, neodymium, ytterbium, dysprosium, terbium, and praseodymium ($Eu_2O_3$, $Nd_2O_3$, $Yb_2O_3$, $Dy_2O_3$, $Tb_2O_3$, respectively) are added to the basic yttria-gadolinia phosphor system, including transparency promoters, as activators to enhance scintillator efficiency. It is to be noted that activator efficacy is independent of the relative proportions of $Y_2O_3$ and $Gd_2O_3$, or the other scintillator material constituents. Generally, rare-earth activator content may range between 0.02 and 12 mole percent.

Yttria-gadolinia scintillators, containing $Eu_2O_3$, exhibit excellent scintillating efficiency. Optimum concentration of $Eu_2O_3$ is between 1 and 6 mole percent. This is illustrated in Fig. 2 which shows that the highest relative light output, indicated on the vertical axis, is observed for $Eu_2O_3$ concentration of between 1 and 6 mole percent, as indicated on the horizontal axis. The curve depicted in Fig. 2 was obtained by varying $Eu_2O_3$ content of a scintillator material containing 25 mole percent $Gd_2O_3$, the remainder being $Y_2O_3$.

Neodymium oxide ($Nd_2O_3$) is preferably added in quantities of between 0.05 and 1.05 mole percent. Most preferably, however, $Nd_2O_3$ is added in concentrations of between 0.1 and 0.5 mole percent. Preferred terbium oxide ($Tb_2O_3$) activator concentration is between 0.05 and 3 mole percent, while the preferred concentration of dysprosium oxide ($Dy_2O_3$) activator is between 0.03 and 1.0 mole percent. The preferred range of $Yb_2O_3$ as an activator is between 0.1 and 2 mole percent. The preferred mole percentage for $Pr_2O_3$ activator is between 0.02 and 0.05.

$Eu_2O_3$ is the preferred activator followed, in order of preference, by $Nd_2O_3$ and $Dy_2O_3$.

Fig. 3a illustrates the dependence of scintillator efficiency, as measured by relative light output, on the compositional ratio of a yttria and gadolinia in a scintillator material containing 3 mole percent $Eu_2O_3$. The relative mole percentages of $Gd_2O_3$ and $Y_2O_3$ are shown on the horizontal axis, while the relative light output is shown on the vertical axis. The dashed line at 50 mole percent $Gd_2O_3$ and 50 mole percent $Y_2O_3$ indicates the beginning of a gradual crystalline phase transition in the scintillator material structure from the cubic phase to the monoclinic phase. It will be observed that high relative light output is obtained from scintillator materials containing up to about 50 percent $Gd_2O_3$. Scintillator materials containing between 50 and 65 mole percent $Gd_2O_3$ exhibit modest relative light output, but are increasingly subject to grain boundary cracking and reduced relative light output due to progressive transition from cubic to monoclinic crystalline phase.

The cubic crystalline phase is characterized by a high degree of scintillator material structural symmetry. Materials having such structure are particularly desirable for CT applications. Scintillator materials having increased amounts of monoclinic phase are characterized by lower relative light outputs and poor optical clarity due to grain boundary cracking and non-uniform crystalline structure. Materials having such non-cubic structure exhibit appreciable light scattering and reabsorption due to a longer effective relative light path length, thereby decreasing the amount of light available for detection by external photosensors.

In considering the usefulness of the scintillator material in CT applications, the x-ray stopping power of the material must also be considered. Fig. 3b illustrates the dependence of 73 keV x-ray stopping length versus yttria-gadolinia compositional ratio for transparent and efficient scintillators. Stopping power is measured in terms of x-ray stopping length, i.e., the distance an x-ray photon penetrates into the scintillator prior to its conversion to optical wavelength photons which are detectable by photosensors X-ray stopping length is primarily dependent on $Gd_2O_3$ content and, as shown in Fig. 3b, increases with increased $Gd_2O_3$ concentration. Generally, it is preferred to use between about 5 mole percent and 50 mole percent $Gd_2O_3$. Materials containing less than about 5 mole percent $Gd_2O_3$ exhibit low x-ray stopping power for most practical detector design, while materials having more than 50 mole percent are increasingly non-cubic and exhibit poor optical clarity. A more preferred range of $Gd_2O_3$ content is between 20 and 40 mole percent. The most preferred range of $Gd_2O_3$ concentration is between 30 mole percent and 40 mole percent, corresponding to an x-ray stopping length of about 0.45 mm. For a 2 millimeter thick scintillator material having an x-ray stopping length of 0.45 mm, approximately 99 percent of x-ray photons entering the material are converted to optical wavelength photons.

Certain additives are useful in the yttria-gadolinia scintillator system of the present invention to reduce undesirable scintillator material luminescent afterglow, which may lead to undesirable distortion and the presence of artifacts in reconstructed images. The luminescent afterglow phenomenon is classifiable into primary or fundamental afterglow and secondary afterglow. Primary afterglow is of relatively short duration (up to approximately 3 milliseconds), while secondary afterglow may be several times to much more than several times the primary decay time. Fundamental luminescent afterglow of a phosphor is thought to be inextricably associated with the specific activator identity and the activator local environment in the host matrix (in this case yttria-gadolinia). The secondary, and most objectionable type of afterglow, can be associated with more subtle changes in the activator environment or simply with the presence of additional electron-hole "trapping" centers created by native defects and/or low level impurities at other sites in the host crystal. Both types of afterglow may be reduced by suitable purification or the addition of compensating dopants. The added dopants used to reduce afterglow do so by forming "killer" centers which are believed to compete with the activator centers for electron-hole pairs that otherwise combine radiatively at the activator centers.

Luminescent afterglow of rare earth doped yttria-gadolinia ceramic scintillators of the present invention can be substantially reduced by several type of additives.

The addition of ytterbium oxide ($Yb_2O_3$), itself a luminescent activator in the yttria-gadolinia host if used alone as described heretofore, results in the reduction of undesirable secondary afterglow with only minor sacrifice of luminescent efficiency. If, as depicted in Fig. 4, the mole percentage of $Yb_2O_3$ is increased from zero to about 2 mole percent, the primary or fundamental afterflow, Z, of the scintillator material activated with 3 mole percent of $Eu_2O_3$ is reduced from 1.1 to 0.82 milliseconds. An increase in $Yb_2O_3$ content from 0 to 2 mole percent is accompanied by the loss of nearly 50 percent of scintillator material luminescent efficiency as graphically depicted in Fig. 5 in which relative light output is shown on the vertical axis, while the $Yb_2O_3$ concentration is shown on the horizontal axis.

Curves A, B, C and D, depicted in Fig. 4, illustrate the fraction of secondary luminescent afterglow (vertical axis) remaining at times greater than 10 milliseconds (horizontal axis) following the cessation of x-ray excitation. For a scintillator material having 30 mole percent $Gd_2O_3$, 3 mole percent $Eu_2O_3$, and 67 mole percent $Y_2O_3$, but no $Yb_2O_3$, it is evident from curve A that at the end of 10 milliseconds following x-ray turn-off about three percent of the luminescence present immediately upon x-ray shut-off remains. Curves B, C, and D depict fractional afterglow for similar scintillator materials which additionally contain 0.2, 0.5 and 2 mole percent $Yb_2O_3$ respectively, and correspondingly less $Y_2O_3$. It is apparent that increasing quantities of $Yb_2O_3$ reduce secondary afterglow. For example, at about 10 milliseconds after x-ray turnoff, fractional afterglow for a scintillator material containing 2 mole percent $Yb_2O_3$ (Curve D) is only approximately 0.7 percent ($7\times10^{-3}$) of its value immediately upon termination of x-ray excitation as compared to about 3 percent ($3\times10^{-2}$) for a material without $Yb_2O_3$ (Curve A). The addition of 0.3 mole percent $Yb_2O_3$ to a scintillator composition made up of 66.7 mole percent $Y_2O_3$, 30 mole percent $Gd_2O_3$, and 3 mole percent $Eu_2O_3$ results in an extremely useful CT scintillator material having a fast decay time. Preferred concentration of $Yb_2O_3$ for afterglow reduction is between about 0.15 and 0.7 mole percent.

Another additive dopant which is effective in reducing scintillator material luminescent afterglow is strontium oxide (SrO). The addition of SrO results primarily in the reduction of secondary afterglow with relatively little sacrifice of luminescent efficiency. In the yttria-gadolinia scintillator system, the quantity of SrO generally found to be useful in reducing afterglow is between 0.1 and 2 mole percent. It is shown in Fig. 6 that an increase in the quantity of SrO from 0 to 2 mole percent has no appreciable effect on primary afterflow, Z, 1.08 milliseconds and 1.10 milliseconds, respectively. However, there is appreciable effect on secondary afterglow as depicted by curves E and F. A scintillator material having 30 mole percent $Gd_2O_3$, 2 mole percent $Eu_2O_3$, 68 mole percent $Y_2O_3$, but no SrO (curve E) exhibits at about 150 milliseconds after x-ray turn-off, about 0.8 percent ($8\times10^{-3}$) of the luminescence present immediately after x-ray shut-off. Scintillator materials having the same composition (curve F) but including 2 mole percent SrO (and 2 mole percent less $Y_2O_3$) exhibit,

after the same elapsed time, only about 0.03 percent ($3\times10^{-4}$) fractional afterglow as indicated on the vertical axis in Fig. 6.

The aforedescribed yttria-gadolinia rare-earth-doped ceramic scintillator materials may be prepared by sintering, sintering plus gas hot isostatic pressing, and hot pressing ceramic methods. The ceramic scintillator materials are preferably and most economically fabricated by employing a sintering process.

A preliminary step in the fabrication of the ceramic scintillators, by any of the aforementioned methods, requires the preparation of a suitable powder containing the desired scintillator material constituents. In accordance with a first method for preparing such a powder, submicrometer-to-micrometer powders of yttria ($Y_2O_3$), gadolinia ($Gd_2O_3$) having purities of, for example, 99.99 percent to 99.9999 percent are mixed with the desired rare-earth activators in the form of oxides, oxalates, carbonates, or nitrates and mixtures thereof. The mixing of the selected constituents may be carried out in an agate mortar and pestle or in a ball mill using water, heptane, or an alcohol (such as ethyl alcohol) as liquid vehicles. Dry milling may also be used for both mixing and breakup of powder aggregates. If dry milling is employed, a grinding aid such as 1 to 5 weight percent of stearic acid or oleic acid should be employed to prevent powder packing or sticking inside the ball mill. Transparency promoters such as SrO, $Yb_2O_3$, $Ta_2O_5$, $ZrO_2$ and $ThO_2$ may also be added in the form of oxides, nitrates, carbonates, or oxalates before ball milling. If the various additives are nitrates, carbonates, or oxalates, a calcining step is required to obtain the corresponding oxides prior to fabrication of the ceramic scintillator by any of the methods described hereinafter.

A second approach to obtaining the desired scintillator starting powder employs a wet chemical oxalate method. In this method, the selected molar percentages of the nitrates of predetermined ones of Y, Gd, Eu, Nb, Yd, Dy, Tb, Pr, and Sr are dissolved in water and coprecipitated in oxalic acid to form the respective oxalates. The oxalate precipitation process involves the addition of an aqueous nitrate solution of the desired scintillator material constituents to an oxalic acid solution which is, for example 80 percent saturated at room temperature. The resulting coprecipitated oxalates are washed, neutralized, filtered, and dried in air at about 100°C for approximately eight hours. The oxalates are then calcined in air (thermally decomposed) at approximately 700°C to about 900°C for a time ranging from one to four hours, to form the corresponding oxides. Typically, heating for one hour at 800°C is sufficient. Preferably, if either the hot pressing or the sintering method is used to prepare the scintillator, the oxalates and/or the resulting oxides are milled by one of several methods such as ball, colloid, or fluid energy milling to enhance the optical clarity. Milling of the powder for between one-half hour and ten hours has been found to be sufficient. It should be noted, however, that typically the optical clarity of the scintillator is improved by milling the oxalates and/or oxides regardless of the preparation method. Zirconium and tantalum which do not form stable oxalates are added to the calcined oxalates in the form of oxides or nitrates. Other additives introduced as oxides include CaO and $ThO_2$. Since these additives are already oxides, they are introduced after the calcination step.

Following the preparation of the selected powder composition by one of the methods described above, in accord with the preparation of scintillator material by sintering, selected amounts of the powder composition are formed into powder compacts by either die pressing, or die pressing followed by isostatic pressing to further increase green density. A die material which is inert with respect to the scintillator constituents is preferred to avoid undesired reactions and contaminations. Suitable die materials include alumina, silicon carbide, and metals such as molybdenum, hardened steel, or nickel-based alloys. The powder compacts are formed by die pressing at pressures of between about 2.068 daN/mm$^2$ (3,000 psi) and 10.34 daN/mm$^2$ (15,000 psi). Alternatively, the die pressed powder compacts may be isostatically pressed at between about 6.89 daN/mm$^2$ (10,000) and 41.36 daN/mm$^2$) (60,000 psi) to further increase powder compact green density. If any grindings aids or compaction aids (lubricants, such as waxes) have been used, an oxidation treatment to remove all organic additives can be employed prior to sintering.

During the sintering phase, the compacts are heated in a high temperature tungsten furnace, for example, in vacuum or a reducing atmosphere such as a wet hydrogen atmosphere (dew point of about 23°C, for example) at a rate of between approximately 100°C per hour to 700°C per hour to the sintering temperature of between 1800°C and 2100°C. The sintering temperature is then held from 1 hour to about 30 hours to cause extensive densification and optical clarity development. Upon termination of the sintering step, the compacts are cooled from the sintering temperature to room temperature over a period of time ranging from about 2 to 10 hours.

Sintered ceramic scintillators may also be prepared by a heating sequence which includes a hold at a temperature lower than the final sintering temperature. Typically, the powder compact is heated at a rate of between 300°C/hr and 400°C/hr to a holding temperature of between about 1600°C and 1700°C. The holding period may range from 1 hour to 20 hours, following which the temperature is raised to between about 1800°C and 2100°C for final sintering for between 1 hour and 10 hours. The increase from the holding temperature to the final sintering temperature is at a rate of between about 25°C/hr and 75°C/hr. A preferred heating sequence comprises heating the powder compact to a holding temperature of 1660°C in five hours, holding this temperature for 10 hours, followed by heating to 1950°C in 6 hours, and then sintering at 1950°C for 2 hours. The preferred heating sequence was used to prepare the aforedescribed ceramic scintillator materials discussed in connection with Fig. 1.

Yttria/gadolinia ceramic scintillators for luminescent applications may also be prepared by a combination of processes involving sintering and gas hot isostatic pressing (GHIP). The starting oxide powder compositions are prepared in accordance with one of the aforedescribed methods. Preferably, the oxalate coprecipitation method is used. By way of example and not limitation, one useful yttria-gadolinia scintillator composition comprised of 66.8 mole percent $Y_2O_3$, 30 mole percent $Gd_2O_3$, 3 mole percent $Eu_2O_3$, and 0,3 mole percent $Yb_2O_3$. In contrast to the previously described sintering process, which preferably requires milling of the oxalate and/or oxide powders to produce transparent ceramics, the process of sintering combined with GHIP permits the fabrication of transparent ceramics from unmilled powders.

In the fabrication of yttria-gadolinia ceramic scintillators by the combined processes of sintering and gas hot isostatic pressing, following the preparation of a powder having the desired composition, powder compacts are formed by cold pressing at pressures of between 2.068 daN/mm$^2$ (3,000 psi) and 6.89 daN/mm$^2$ (10,000 psi), followed by isostatic pressing at pressures of between 10.34 daN/mm$^2$ (15,000 psi) and 41.36 (60,000 psi). The pressed compacts are then presintered to 93 to 98 percent of their theoretical density at temperatures of about 1500°C to 1700°C for between 1 and 10 hours. The presintered compacts are then gas hot isostatically pressed with argon gas at pressures of 0.689 daN/mm$^2$ (1,000 psi) to 20.68 daN/mm$^2$ (30,000 psi) at temperatures between 1500°C and 1800°C for 1 to 2 hours.

In accordance with an example of the preparation of a ceramic scintillator employing the sintering and GHIP technique, a powder compact was formed by cold pressing approximately 20 grams of powder in a rectangular die at a pressure of approximately 2.75 daN/mm$^2$ (4,000 psi). The sample was then isostatically pressed at 20.68 daN/mm$^2$ (30,000 psi) to increase green density to 49 percent of its theoretical value. The cold pressing of the sample was followed by sintering in a wet hydrogen atmosphere (dew point 23°C) for two hours at 1660°C so that closed porosity is developed. The density of the sintered sample, as measured by ths water immersion method, at this stage in the fabrication process was determined to be between 93 and 98 percent of its theoretical value. In order to obtain additional densification and optical transparency the sample was gas hot isostatically pressed in a carbon resistance furnace at 1750°C for one hour at an argon pressure of 17.23 daN/mm$^2$ (25,000 psi). During gas hot isostatic pressing, the temperature was increased to the final value of 1750°C in a step-wise manner. The sample was initially heated in one hour to 1400°C and the temperature raised thence to 1750°C, the resulting ceramic scintillator had a black appearance due to reduction in the reducing furnace atmosphere. The sample was rendered transparent to visible light by suitable oxidation treatment such as heating in air at a temperature of 1200°C for thirty-two hours. Comparison of the physical dimensions of the sample before and after the GHIP treatment indicates that the sample shrunk during GHIP step, indicating further densification. The finished ceramic exhibited a density of greater than 99.9 percent of theoretical value.

Transparent yttria-gadolinia ceramic scintillators may also be prepared by vacuum hot pressing a scintillator material powder prepared, preferably, by the afore described wet oxalate coprecipitation process. In accordance with this method, a selected quantity of the calcined oxalate powder (preferably milled) is pressed in a graphite die with molybdenum foil used as spacers between the upper and lower graphite plungers. Alternatively, a boron nitride coated graphite die may be used. A pressure of 0.689 daN/mm$^2$ (1000 psi) to 0.827 daN/mm$^2$ (1200 psi) is applied at a temperature of between about 600°C and 700°C under a vacuum of less than 200 micrometers and maintained for about one hour. Thereafter, the pressure is increased to approximately between 2.76 daN/mm$^2$ (4000 psi) and 6.89 daN/mm$^2$ (10,000 psi). The pressure is released after a hold at the elevated temperature of between one-half to four hours and the sample furnace cooled to room temperature.

Ceramic scintillator samples prepared in accordance with the hot-pressing method may be discolored due to surface reaction with the molybdenum spacer. Additional discoloration may be due to oxygen deficiency in the furnace atmosphere during hot pressing. The ceramics, however, can be made optically clear by oxidation in air or an oxygen-containing atmosphere at a temperature of about 800°C to 1200°C for between one and twenty hours. Any residual discoloration may be removed by conventional grinding and polishing techniques.

In a specific example of the preparation of a scintillator material by the vacuum hot-pressing method, 10 grams of a scintillator oxide material were obtained from the aforedescribed oxalate coprecipitation process by calcination of the oxalates at 800°C for one hour in air. The oxides were initially hot pressed in a boron nitride coated graphite die at 700°C for one hour under a vacuum of about 20 micrometers and at a pressure of 0.827 daN/mm$^2$ (1200 psi). The temperature and pressure were then increased to 1400°C and 4.13 daN/mm$^2$ (6,000 psi), respectively, under a vacuum of approximately 100 micrometers. These conditions were maintained for two hours, following which the pressure was released and the resulting scintillator material furnace cooled.

The scintillator material was gray to gray-black in color due to the reducing atmosphere created in the hot press. Light grinding of the scintillator surface and heating at 950°C for four hours removed carbon sticking to the scintillator material. The remainder of the dark coloration was removed by additional oxidation at 1150°C for two hours in air. The resulting scintillator material was "light tan" in color, translucent to transparent in optical quality, and exhibited good relative light output upon excitation by x-rays.

**Claims**

1. A polycrystalline scintillator comprising between 5 and 50 mole percent $Gd_2O_3$, between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$ and $Pr_2O_3$, at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent, and at least one light output restorer selected from the group consisting of CaO and SrO, the remainder being $Y_2O_3$.

2. The polycrystalline ceramic scintillator of claim 1 wherein said transparency promoter comprises between 0.2 and 0.7 mole percent $ThO_2$ or $ZrO_2$.

3. The polycrystalline ceramic scintillator of claim 1 wherein said transparency promoter comprises between 0.1 and 0.5 mole percent $Ta_2O_5$.

4. The polycrystalline ceramic scintillator of claim 1 wherein said light output restorer comprises between 0.2 and 4 mole percent CaO.

5. A polycrystalline ceramic scintillator comprising between 5 and 50 mole percent $Gd_2O_3$, at least one rare-earth activator oxide selected from the group consisting of $Eu_2O_3$, $Nd_2O_3$, $Yb_2O_3$, $Dy_2O_3$, $Tb_2O_3$ and $Pr_2O_3$ and up to about 0.35 mole percent of a transparency promoter selected from the group consisting of $ThO_2$, $ZrO_2$ and $Ta_2O_5$.

6. The polycrystalline ceramic scintillator of claims 1 or 5 comprising between 20 and 40 mole percent $Gd_2O_3$.

7. The polycrystalline ceramic scintillator of any of claims 1—6 comprising between 1 and 6 mole percent $Eu_2O_3$.

8. The polycrystalline ceramic scintillator of any of claims 1—6 comprising between 0.05 and 1.5 mole percent $Nd_2O_3$.

9. The polycrystalline ceramic scintillator of any of claims 1—6 comprising between 0.1 and 0.5 mole percent $Nd_2O_3$.

10. The polycrystalline ceramic scintillator of any of claims 1—6 comprising between 0.05 and 3 mole percent $Tb_2O_3$.

11. The polycrystalline ceramic scintillator of any of claims 1—6 comprising between 0.1 and 2 mole percent $Yb_2O_3$.

12. The polycrystalline ceramic scintillator of any of claims 1—6 comprising between 0.03 and 1 mole percent $Dy_2O_3$.

13. The polycrystalline ceramic scintillator of any of claims 1—6 comprising between 0.02 and 0.05 mole percent $Pr_2O_3$.

14. The polycrystalline ceramic scintillator of claim 1 wherein said light output restorer comprises between 0.1 and 3 mole percent SrO.

15. A method for preparing polycrystalline ceramic scintillator body comprising the steps of:

preparing a multicomponent powder having between 5 and 50 mole percent $Gd_2O_3$, between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$ and $Pr_2O_3$, at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent and at least one light output restorer selected from the group consisting of CaO and SrO, the remainder of said multicomponent powder being $Y_2O_3$;

pressing said multicomponent powder to form a powder compact;

sintering said powder compact to the closed porosity stage; and

pressing the sintered powder compact by the gas hot isostatic process to form said polycrystalline ceramic scintillator body.

16. A method for preparing a polycrystalline ceramic scintillator body comprising the steps of:

preparing a multicomponent powder having between 5 and 50 mole percent $Gd_2O_3$, between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$ and $Pr_2O_3$, at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent, and at least one light output restorer selected from the group consisting of CaO and SrO, the remainder of said multicomponent powder being $Y_2O_3$;

pressing said multicomponent powder under vacuum at a first temperature and pressure for a first predetermined period of time; and

increasing said first temperature and pressure to a second temperature and pressure and maintaining said second temperature and pressure for a second period of time to form said polycrystalline ceramic scintillator body.

17. A method for preparing a polycrystalline ceramic scintillator body comprising the steps of:

preparing a multicomponent powder having between 5 and 50 mole percent $Gd_2O_3$, between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$ and $Pr_2O_3$ at least one transparency promoter selected from the group consisting of $ThO_2$ in an amount up to 0.7 mole percent, $ZrO_2$ in an amount up to 0.7 mole percent and $Ta_2O_5$ in an amount up to 0.5 mole percent and at least one light output restorer selected from the group consisting of CaO and SrO, the remainder of said multicomponent powder being $Y_2O_3$;

cold pressing said heated multicomponent powder to form a powder compact; and sintering said powder compact to form said polycrystalline ceramic scintillator body.

18. The method of any of claims 15—17 wherein said transparency promoter comprises between 0.2 and 0.7 mole percent $ThO_2$.

19. The method of any of claims 15—17 wherein said transparency promoter comprises between 0.2 and 0.7 mole percent $ZrO_2$.

20. The method of any of claims 15—17 wherein said transparency promoter comprises between 0.1 and 0.5 mole percent $Ta_2O_5$.

21. The method of any of claims 15—17 wherein said multicomponent powder comprises between 20 and 40 mole percent $Gd_2O_3$.

22. The method of any of claims 15—17 wherein said multicomponent powder comprises between 0.2 and 4 mole percent CaO.

23. The method of any of claims 15—17 wherein said multicomponent powder comprises between 1 and 6 mole percent $Eu_2O_3$.

24. The method of any of claims 15—17 wherein said multicomponent powder comprises between 0.05 and 1.5 mole percent $Nd_2O_3$.

25. The method of any of claims 15—17 wherein said multicomponent powder comprises between 0.05 and 3 mole percent $Tb_2O_3$.

26. The method of any of claims 15—17 wherein said multicomponent powder comprises between 0.1 and 2 mole percent $Yb_2O_3$.

27. The method of any of claims 15—17 wherein said multicomponent powder comprises between 0.03 and 1 mole percent $Dy_2O_3$.

28. The method of any of claims 15—17 wherein said multicomponent powder comprises between 0.02 and 0.05 mole percent $Pr_2O_3$.

29. The method of any of claims 15—17 wherein said light output restorer comprises between 0.1 and 3 mole percent SrO.

30. The method of any of claims 15—17 wherein said step of preparing said multicomponent powder comprises mixing the high purity, micrometer-to-submicrometer powders of $Gd_2O_3$, $Y_2O_3$, at least one of said rare-earth activator oxides, at least one of said transparency promoters and at least one of said light output restorers.

31. The method of any of claims 15—17 wherein said step of preparing said multicomponent powder comprises the steps of:

coprecipitating by the wet chemical oxalate process the oxalates of Y, Gd, and at least one of said rare-earth activator oxides;

calcining said oxalates so as to obtain the corresponding oxides; and

mixing at least one of said transparency promoters and at least one of said light output restorers with said oxides obtained in said calcining step.

32. The method of claim 31 wherein said step of calcining comprises the step of heating said oxalates in air at a temperature of between 700°C and 900°C for between 1 hour and 4 hours.

33. The method of claim 31 wherein said step of calcining is preceded by the step of milling said oxalates.

34. The method of any of claims 31 or 33 further comprising the step of milling said oxides obtained in said calcining step.

35. The method of any of claims 15, 30 or 31 wherein said step of pressing to form said powder compact comprises the steps of:

cold pressing said multicomponent powder at a pressure of between 2.063 daN/mm² (3,000 psi) and 6.89 daN/mm² (10,000 psi) to form a preliminary powder compact; and then

isostatically pressing said preliminary powder compact at a pressure of between 10.34 daN/mm² (15,000 psi) and 41.36 daN/mm² (60,000 psi) to increase the green density thereof.

36. The method of claim 35 wherein said step of sintering comprises heating said powder compact at a temperature of between 1500°C and 1700°C for between 1 and 10 hours.

37. The method of claim 36 wherein said step of pressing the sintered powder compact by the gas hot isolatic process comprises the step of heating at a temperature of between 1500°C and 1800°C for between 1 and 2 hours at an argon gas pressure of between 0.689 daN/mm² (1,000 psi) and 20.68 daN/mm² (30,000 psi).

38. The method of claim 37 wherein said step of pressing the sintered powder compact by the gas hot isostatic process more specifically comprises the steps of:

heating said powder compact for one hour to raise the temperature thereof to 1400°C, continue heating said powder compact for an additional one hour to raise the temperature thereof to 1750°C; and then

maintaining the temperature of said powder compact at 1750°C for 1 hour prior to furnace-cooling said powder compact to room temperature, said steps of heating and maintaining the temperature being performed at an argon gas pressure of 17.225 daN/mm² (25,000 psi).

39. The method of any of claims 16, 30 or 31 wherein said step of pressing comprises the step of pressing said multicomponent powder at a pressure of between 0.689 daN/mm² (1,000 psi) and 0.827 daN/mm² (1,200 psi) at a temperature of between 600°C and 700°C under a vacuum of up to 200 micrometers for up to 1 hour.

40. The method of claim 39 wherein said step of increasing said first temperature and pressure comprises increasing the temperature to between 1300°C and 1600°C, increasing the pressure to between 2,75 daN/mm² (4,000 psi) and 6,89 daN/mm² (10,000 psi), and maintaining said increased temperature and pressure for between one-half hour to 4 hours.

41. The method of claim 40 further comprising the step of oxidizing the resulting hot pressed ceramic, said step of oxidizing including heating said ceramic in an oxygen-containing atmosphere for between 1 and 20 hours at a temperature of between 800°C and 1200°C so as to remove any discoloration.

42. The method of any of claims 17, 30 or 31 wherein said step of cold pressing comprises the step of die pressing said multicomponent powder at a pressure of between 2.068 daN/mm$^2$ (3,000 psi) and 10.34 daN/mm$^2$ (15,000 psi).

43. The method of claim 42 wherein said step of cold pressing further comprises the step of isostatically pressing the die pressed multicomponent powder at a pressure of between 6.89 daN/mm$^2$ (10,000 psi) and 41.36 daN/mm$^2$ (60,000 psi) to further increase the green density of said powder compact.

44. The method of claim 42 wherein said step of sintering comprises the steps of:

heating said powder compact at a rate of between 100°C per hour and 700°C per hour to a sintering temperature of between 1800°C and 2100°C; and

holding said sintering temperature for between 1 and 30 hours.

45. The method of claim 42 wherein said step of sintering comprises the steps of:

heating said powder compact at a rate of between 300°C/hr and 400°C/hr to a holding temperature of between 1600°C and 1700°C;

maintaining said holding temperature for between 1 and 20 hours and then increasing the temperature at a rate of between 25°C/hr and 75°C/hr to a final sintering temperature of between 1800°C and 2100°C; and

maintaining the final sintering temperature for between 1 and 10 hours.

46. The method of claim 44 wherein said step of heating comprises heating said powder compact in vacuum or a reducing atmosphere.

47. The method of claim 44 further comprising the step of cooling the resulting polycrystalline ceramic scintillator body to room temperature over a period of between 2 and 10 hours.

**Patentansprüche**

1. Polykristalliner Scintillator enthaltend zwischen 5 und 50 Mol-% $Gd_2O_3$, zwischen 0,02 und 12 Mol-% Aktivatoroxid von wenigstens einer Seltenen Erde, ausgewählt aus der Gruppe, bestehend aus $Eu_2O_3$, $Nd_2O_3$, $Yb_2O_3$, $Dy_2O_3$, $Tb_2O_3$ und $Pr_2O_3$, wenigstens einem transparenten Aktivator, ausgewählt aus der Gruppe, bestehend aus $ThO_2$ in einer Menge von bis zu 0,7 Mol-%, $ZrO_2$ in einer Menge bis zu 0,7 Mol-% und $Ta_2O_5$ in einer Menge bis zu 0,5 Mol-% und wenigstens einem Lichtaustrittsspeicher, ausgewählt aus der Gruppe, bestehend aus Calciumoxid und Strontiumoxid und der Rest ist $Y_2O_3$.

2. Polykristalliner keramischer Scintillator nach Anspruch 1, worin der transparente Aktivator zwischen 0,2 und 0,7 Mol-% $ThO_2$ oder $ZrO_2$ umfaßt.

3. Polykristalliner keramischer Scintillator nach Anspruch 1, worin der transparente Aktivator zwischen 0,1 und 0,5 Mol-% $Ta_2O_5$ umfaßt.

4. Polykristalliner keramischer Scintillator nach Anspruch 1, worin der Lichtaustrittsspeicher zwischen 0,2 und 4 Mol-% CaO umfaßt.

5. Polykristalliner keramischer Scintillator, der zwischen 5 und 50 Mol-% $Gd_2O_3$, wenigstens ein Aktivatoroxid der Seltenen Erden, ausgewählt aus der Gruppe, bestehend aus $Eu_2O_3$, $Nd_2O_3$, $Yb_2O_3$, $Dy_2O_3$, $Tb_2O_3$ und $Pr_2O_3$ und bis zu etwa 0,35 Mol-% eines transparenten Aktivators, ausgewählt aus der Gruppe, bestehend aus $ThO_2$, $ZrO_2$ und $Ta_2O_5$.

6. Polykristalliner keramischer Scintillator nach den Ansprüchen 1 bis 5, der zwischen 20 und 40 Mol-% $Gd_2O_3$ enthält.

7. Polykristalliner keramischer Scintillator nach einem der Ansprüche 1 bis 6, der zwischen 1 und 6 Mol-% $Eu_2O_3$ enthält.

8. Polykristalliner keramischer Scintillator nach einem der Ansprüche 1 bis 6, der zwischen 0,05 und 1,5 Mol-% $Nd_2O_3$ enthält.

9. Polykristalliner keramischer Scintillator nach einem der Ansprüche 1 bis 6, der zwischen 0,1 und 0,5 Mol-% $Nd_2O_3$ enthält.

10. Polykristalliner keramischer Scintillator nach einem der Ansprüche 1 bis 6, der zwischen 0,05 und 3 Mol-% $Tb_2O_3$ enthält.

11. Polykristalliner keramischer Scintillator nach einem der Ansprüche 1 bis 6, der zwischen 0,1 und 2 Mol-% $Yb_2O_3$ enthält.

12. Polykristalliner keramischer Scintillator nach einem der Ansprüche 1 bis 6, der zwischen 0,03 und 1 Mol-% $Dy_2O_3$ enthält.

13. Polykristalliner keramischer Scintillator nach einem der Ansprüche 1 bis 6, der zwischen 0,02 und 0,05 Mol-% $Pr_2O_3$ enthält.

14. Polykristalliner keramischer Scintillator nach Anspruch 1, worin der Lichtaustrittsspeicher zwischen 0,1 und 3 Mol-% SrO enthält.

15. Verfahren zur Herstellung eines polykristallinen keramischen Scintillatorkörpers, welches die folgenden Schritte umfaßt:

Herstellung eines Mehrkomponentenpulvers, welches zwischen 5 und 50 Mol-% $Cd_2O_3$, zwischen 0,02 und 12 Mol-% Aktivatoroxid von wenigstens einer Seltenen Erde, ausgewählt aus der Gruppe, bestehend aus $Eu_2O_3$, $Nd_2O_3$, $Yb_2O_3$, $Dy_2O_3$, $Tb_2O_3$ und $Pr_2O_3$, wenigstens einen transparenten Aktivator, ausgewählt aus der Gruppe, bestehend aus $ThO_2$ in einer Menge von bis zu 0,7 Mol-%, $ZrO_2$ in einer Menge von bis zu 0,7 Mol-% und $Ta_2O_3$ in einer Menge bis zu 0,5 Mol-% und wenigstens einen Lichtaustrittsspeicher, ausgewählt aus der Gruppe, bestehend aus CaO und SrO, wobei der Rest dieses Mehrkomponentenpulvers $Y_2O_3$ ist;

Pressen des Mehrkomponentenpulvers zu einem Pulverpreßling;

Sintern des Pulverpreßlings bis zur Stufe der geschlossenen Porosität, und

Pressen des gesinterten Pulverpreßlings durch das isostatische Heißgasverfahren zur Ausbildung des polykristallinen keramischen Scintillatorkörpers.

16. Verfahren zur Herstellung eines polykristallinen keramischen Scintillatorkörpers, welches die folgenden Schritte umfaßt:

Herstellung eines Mehrkomponentenpulvers, welches zwischen 5 und 50 Mol-% $Gd_2O_3$, zwischen 0,02 und 12 Mol-% Aktivatoroxid aus wenigstens einem einer Seltenen Erde, ausgewählt aus der Gruppe, bestehend aus $Eu_2O_3$, $Nd_2O_3$, $Yb_2O_3$, $Dy_2O_3$, $Tb_2O_3$ und $Pr_2O_3$, wenigstens einem transparenten Aktivator, ausgewählt aus der Gruppe, bestehend aus $ThO_2$ in einer Menge bis zu 0,7 Mol-%, $ZrO_2$ in einer Menge bis zu 0,7 Mol-% und $Ta_2O_5$ in einer Menge bis zu 0,5 Mol-% und wenigstens einen Lichtaustrittsspeicher, ausgewählt aus der Gruppe, bestehend aus CaO und SrO enthält und der Rest des Mehrkomponentenpulvers $Y_2O_3$ ist;

Pressen dieses Mehrkomponentenpulvers unter Vakuum bei einer ersten Temperatur und Druck für eine erste vorherbestimmte Zeitdauer und

Erhöhen der ersten Temperatur und des Druckes auf eine zweite Temperatur und Druck und Aufrechterhalten von zweiter Temperatur und Druck für eine zweite Zeitdauer zur Ausbildung des polykristallinen keramischen Scintillatorkörpers.

17. Verfahren zur Herstellung eines polykristallinen keramischen Scintillatorkörpers, welches die folgenden Stufen umfaßt:

Herstellung eines Mehrkomponentenpulvers, das zwischen 5 und 50 Mol-% $Gd_2O_3$, zwischen 0,02 und 12 Mol-% Aktivatoroxid von wenigstens einer Seltenen Erde, ausgewählt aus der Gruppe, bestehend aus $Eu_2O_3$, $Nd_2O_3$, $Yb_2O_3$, $Dy_2O_3$, $Tb_2O_3$ und $Pr_2O_3$, wenigstens einen transparenten Aktivator, ausgewählt aus der Gruppe aus $ThO_2$ in einer Menge bis zu 0,7 Mol-%, $ZrO_2$ in einer Menge von bis zu 0,7 Mol-% und $Ta_2O_5$ in einer Menge bis zu 0,5 Mol-% und wenigstens einen Lichtaustrittsspeicher, ausgewählt aus der Gruppe, bestehend aus CaO und SrO aufweist, wobei der Rest dieses Mehrkomponentenpulvers $Y_2O_3$ ist;

Kaltpressen des erhitzten Mehrkomponentenpulvers zur Ausbildung eines Pulverpreßlings, und

Sintern dieses Pulverpreßlings zur Bildung des polykristallinen keramischen Scintillatorkörpers.

18. Verfahren nach einem der Ansprüche 15 bis 17, worin der transparente Aktivator zwischen 0,2 und 0,7 Mol-% $ThO_2$ enthält.

19. Verfahren nach einem der Ansprüche 15 bis 17, worin der transparente Aktivator zwischen 0,2 und 0,7 Mol-% $ZrO_2$ enthält.

20. Verfahren nach einem der Ansprüche 15 bis 17, worin der transparente Aktivator zwischen 0,1 und 0,5 Mol-% $Ta_2O_5$ enthält.

21. Verfahren nach einem der Ansprüche 15 bis 17, worin das Mehrkomponentenpulver zwischen 20 und 40 Mol-% $Gd_2O_3$ enthält.

22. Verfahren nach einem der Ansprüche 15 bis 17, worin das Mehrkomponentenpulver zwischen 0,2 und 4 Mol-% CaO enthält.

23. Verfahren nach einem der Ansprüche 15 bis 17, worin das Mehrkomponentenpulver zwischen 1 und 6 Mol-% $Eu_2O_3$ enthält.

24. Verfahren nach einem der Ansprüche 15 bis 17, worin das Mehrkomponentenpulver zwischen 0,05 und 1,5 Mol-% $Nd_2O_3$ enthält.

25. Verfahren nach einem der Ansprüche 15 bis 17, worin das Mehrkomponentenpulver zwischen 0,05 und 3 Mol-% $Tb_2O_3$ enthält.

26. Verfahren nach einem der Ansprüche 15 bis 17, worin das Mehrkomponentenpulver zwischen 0,1 und 2 Mol-% $Yb_2O_3$ enthält.

27. Verfahren nach einem der Ansprüche 15 bis 17, worin das Mehrkomponentenpulver zwischen 0,03 und 1 Mol-% $Dy_2O_3$ enthält.

28. Verfahren nach einem der Ansprüche 15 bis 17, worin das Mehrkomponentenpulver zwischen 0,02 und 0,05 Mol-% $Pr_2O_3$ enthält.

29. Verfahren nach einem der Ansprüche 15 bis 17, worin der Lichtaustrittsspeicher zwischen 0,1 und 3 Mol-% SrO enthält.

30. Verfahren nach einem der Ansprüche 15 bis 17, worin die Stufe zur Herstellung des Mehrkomponentenpulvers das Mischen der hochreinen mikrometer- bis submikrometerfeinen Pulver von $Gd_2O_3$, $Y_2O_3$, wenigstens einem der Seltenen Erdaktivatoroxide, wenigstens einem der transparenten Aktivatoren und wenigstens einem der Lichtaustrittsspeicher umfaßt.

31. Verfahren nach einem der Ansprüche 15 bis 17, worin die Stufe der Herstellung des Mehrkomponentenpulvers die folgenden Schritte umfaßt:

Zusammenausfällen der Oxalate von Y, Gd, und wenigstens einem der Seltenen Erdaktivatoroxide nach dem chemischen Naßoxalat-Verfahren;

Calcinieren der Oxalate, um die entsprechenden Oxide zu erhalten, und

Mischen von wenigstens einem der transparenten Aktivatoren und wenigstens einem der Lichtaustrittsspeicher mit den Oxiden, die in der Calcinierungsstufe erhalten wurden.

32. Verfahren nach Anspruch 31, worin die Calcinierungsstufe das ein- bis vierstündige Erhitzen in Luft auf eine Temperatur zwischen 700°C und 900°C umfaßt.

33. Verfahren nach Anspruch 31, worin der Calcinierungsstufe die Stufe des Mahlens der Oxalate vorausgeht.

34. Verfahren nach einem der Ansprüche 31 oder 33, welches weiterhin die Stufe des Mahlens der in der Calcinierungsstufe erhaltenen Oxide umfaßt.

35. Verfahren nach einem der Ansprüche 15, 30 oder 31, worin die Preßstufe zur Bildung des Pulverpreßlings die folgenden Schritte umfaßt:

Kaltpressen des Mehrkomponentenpulvers bei einem Druck zwischen 2,063 $daN/mm^2$ (3,000 psi) und 6,89 $daN/mm^2$ (10,000 psi) unter Bildung eines vorläufigen Pulverpreßlings und anschließendes isostatisches Pressen des vorläufigen Pulverpreßlings bei einem Druck zwischen 10,34 $daN/mm^2$ (15,000 psi) und 41,36 $daN/mm^2$ (60,000 psi) zur Vergrößerung der ungesinterten Dichte desselben.

36. Verfahren nach Anspruch 35, worin die Sinterstufe das ein- bis zehnstündige Erhitzen des Pulverpreßlings auf eine Temperatur zwischen 1500°C und 1700°C umfaßt.

37. Verfahren nach Anspruch 36, worin die Preßstufe des gesinterten Pulverpreßlings durch isostatisches Heißgaspreßverfahren, das ein- bis zweistündige Erhitzen auf eine Temperatur zwischen 1500°C und 1800°C unter einem Argongasdruck zwischen 0,689 daN/mm$^2$ (1,000 psi) und 20,68 daN/mm$^2$ (30,000 psi) umfaßt.

38. Verfahren nach Anspruch 37, worin die Preßstufe des gesinterten Pulverpreßlings durch das isostatische Heißgasverfahren die folgenden speziellen Verfahrensschritte umfaßt:

einstündiges Erhitzen des Pulverpreßlings, um die Temperatur desselben auf 1400°C zu steigern,

Fortsetzen des Erhitzens des Pulverpreßlings für eine weitere Stunde, um die Temperatur desselben auf 1750°C zu steigern und dann Aufrechterhaltung der Temperatur des Pulverpreßlings für eine weitere Stunde auf 1750°C, bevor der Pulverpreßling der Ofenkühlung bis auf Raumtemperatur unterworfen wird, wobei die Stufen des Erhitzens und des Aufrechterhaltens der Temperatur bei einem Argongasdruck von 17,225 daN/mm$^2$ (25,000 psi) durchgeführt werden.

39. Verfahren nach einem der Ansprüche 16, 30 oder 31, worin die Preßstufe das bis zu einstündige Pressen des Mehrkomponentenpulvers bei einem Druck zwischen 0,689 daN/mm$^2$ (1,000 psi) und 0,827 daN/mm$^2$ (1,200 psi) bei einer Temperatur zwischen 600°C und 700°C unter einem Vakuum von bis zu 200 Mikrometer umfaßt.

40. Verfahren nach Anspruch 39, worin die Stufe des Steigerung der ersten Temperatur und des Druckes das Erhöhen der Temperatur auf einen Wert zwischen 1300°C und 1600°C, das Steigern des Druckes auf einen Wert zwischen 2,75 daN/mm$^2$ (4,000 psi) und 6,89 daN/mm$^2$ (10,000 psi) und die Aufrechterhaltung der erhöhten Temperatur und des erhöhten Drückes für eine halbe Stunde bis vier Stunden umfaßt.

41. Verfahren nach Anspruch 40, welches weiterhin die Stufe der Oxidation der erhaltenen heißgepreßten Keramik umfaßt, wobei die Oxidationsstufe das ein bis zwanzigstündige Erhitzen der Keramik in einer sauerstoffhaltigen Atmosphäre auf eine Temperatur zwischen 800°C und 1200°C umfaßt, um so Verfärbung zu enternen.

42. Verfahren nach einem der Ansprüche 17, 30 oder 31, worin die Stufe des Kaltpressens das Formpressen des Mehrkomponentenpulvers bei einem Druck zwischen 2,068 daN/mm$^2$ (3,000 psi) und 10,34 daN/mm$^2$ (15,000 psi) umfaßt.

43. Verfahren nach Anspruch 42, worin die Stufe des Kaltpressens weiterhin die Stufe des isostatischen Pressens des formgepreßten Mehrkomponentenpulvers bei einem Druck zwischen 6,89 daN/mm$^2$ (10,000 psi) und 41,36 daN/mm$^2$ (60,000 psi) umfaßt, um die Rohdichte des Pulverpreßlings weiter zu steigern.

44. Verfahren nach Anspruch 42, worin die Sinterstufe die folgenden Schritte umfaßt:

Erhitzen des Pulverpreßlings mit einer Geschwindigkeit zwischen 100°C pro Stunde und 700°C pro Stunde auf eine Sintertemperatur zwischen 1800°C und 2100°C, und

Aufrechterhaltung dieser Sintertemperatur für die Dauer zwischen 1 und 30 Stunden.

45. Verfahren nach Anspruch 42, worin die Sinterstufe die folgenden Schritte umfaßt:

Erhitzen des Pulverpreßlings mit einer Geschwindigkeit zwischen 300°C pro Stunde und 400°C pro Stunde auf eine Haltetemperatur zwischen 1600°C und 1700°C;

Aufrechterhaltung dieser Haltetemperatur für eine Zeitdauer zwischen 1 und 20 Stunden und anschließendes Steigern der Temperatur mit einer Rate zwischen 25°C/h und 75°C/h auf eine End-Sinter-temperatur zwischen 1800°C und 2100°C; und

Aufrechterhaltung der End-Sintertemperatur für die Dauer von 1 bis 10 Stunden.

46. Verfahren nach Anspruch 44, worin die Erhitzungsstufe das Erhitzen des Pulverpreßlings in Vakuum oder einer reduzierenden Atmosphäre umfaßt.

47. Verfahren nach Anspruch 44, welches weiterhin die Stufe des Abkühlens des erhaltenen polykristallinen keramischen Scintillatorkörpers auf Raumtemperatur innerhalb einer Zeitdauer zwischen 2 und 10 Stunden umfaßt.

**Revendications**

1. Scintillateur polycristallin comprenant entre 5 et 50 moles pourcent de $Gd_2O_3$, entre 0,02 et 12 moles pourcent d'au moins un activateur en oxyde de terres rares choisi dans le groupe constitué par $Eu_2O_3$, $Nd_2O_3$, $Yb_2O_3$, $Dy_2O_3$, $Tb_2O_3$ et $Pr_2O_3$, au moins un promoteur de transparence choisi dans le groupe constitué par $ThO_2$ en une quantité pouvant aller jusqu'à 0,7 mole pourcent, $ZrO_2$ en une quantité pouvant aller jusqu'à 0,7 mole pourcent et $Ta_2O_5$ en une quantité pouvant aller jusqu'à 0,5 mole pourcent, et au moins un agent de rétablissement du rendement lumineux choisi dans le groupe constitué par CaO et SrO, le reste étant $Y_2O_3$.

2. Scintillateur en céramique polycristalline selon la revendication 1, dans lequel le promoteur de transparence se compose de $ThO_2$ ou $ZrO_2$ en une quantité comprise entre 0,2 et 0,7 mole pourcent.

3. Scintillateur en céramique polycristalline selon la revendication 1 dans lequel le promoteur de transparence se compose de $Ta_2O_5$ en une quantité comprise entre 0,1 et 0,5 mole pourcent.

4. Scintillateur en céramique polycristalline selon la revendication 1 dans lequel l'agent de rétablissement du rendement lumineux se compose de CaO en une quantité comprise entre 0,2 et 4 moles pourcent.

5. Scintillateur en céramique polycristalline comprenant entre 5 et 50 moles pourcent de $Gd_2O_3$, au moins un activateur en oxyde de terres rares choisi dans le groupe constitué par $Eu_2O_3$, $Nd_2O_3$, $Yb_2O_3$, $Dy_2O_3$, $Tb_2O_3$ et $Pr_2O_3$, et jusqu'à

environ 0,35 mole pourcent d'un promoteur de transparence choisi dans le groupe constitué par $ThO_2$, $ZrO_2$, et $Ta_2O_5$.

6. Scintillateur en céramique polycristalline selon la revendication 1 ou 5, comprenant entre 20 et 40 moles pourcent de $Gd_2O_3$.

7. Scintillateur en céramique polycristalline selon l'une quelconque des revendications 1 à 6 comprenant entre 1 et 6 moles pourcent de $Eu_2O_3$.

8. Scintillateur en céramique polycristalline selon l'une quelconque des revendications 1 à 6 comprenant entre 0,05 et 1,5 mole pourcent de $Nd_2O_3$.

9. Scintillateur en céramique polycristalline selon l'une quelconque des revendications 1 à 6 comprenant entre 0,1 et 0,5 mole pourcent de $Nd_2O_3$.

10. Scintillateur en céramique polycristalline selon l'une quelconque des revendications 1 à 6 comprenant entre 0,05 et 3 moles pourcent de $Tb_2O_3$.

11. Scintillateur en céramique polycristalline selon l'une quelconque des revendications 1 à 6 comprenant entre 0,1 et 2 moles pourcent de $Yb_2O_3$.

12. Scintillateur en céramique polycristalline selon l'une quelconque des revendications 1 à 6 comprenant entre 0,03 et 1 mole pourcent de $Dy_2O_3$.

13. Scintillateur en céramique polycristalline selon l'une quelconque des revendications 1 à 6 comprenant entre 0,02 et 0,05 mole pourcent de $Pr_2O_3$.

14. Scintillateur en céramique polycristalline selon la revendication 1 dans lequel l'agent de rétablissement du rendement lumineux se compose de SrO en une quantité comprise entre 0,1 et 3 moles pourcent.

15. Méthode de préparation d'un corps de scintillateur en céramique polycristalline comprenant les étapes de:

préparation d'une poudre à composants multiples comprenant entre 5 et 50 moles pourcent de $Gd_2O_3$, entre 0,02 et 12 moles pourcent d'au moins un activateur en oxyde de terres rares choisi dans le groupe constitué par $Eu_2O_3$, $Nd_2O_3$, $Yb_2O_3$, $Dy_2O_3$, $Tb_2O_3$ et $Pr_2O_3$, au moins un promoteur de transparence choisi dans le groupe constitué par $ThO_2$ en une quantité pouvant aller jusqu'à 0,7 mole pourcent, $ZrO_2$ en une quantité pouvant aller jusqu'à 0,7 mole pourcent et $Ta_2O_5$ en une quantité pouvant aller jusqu'à 0,5 mole pourcent, et au moins un agent de rétablissement du rendement lumineux choisi dans le groupe constitué par CaO et SrO, le reste de cette poudre à composants multiples étant $Y_2O_3$;

pressage de la poudre à composants multiples pour former un comprimé de poudre;

frittage du comprimé de poudre jusqu'à l'état de porosité fermée; et

pressage du comprimé de poudre fritté par le procédé isostatique à gaz chaud pour former le corps de scintillateur en céramique polycristalline.

16. Méthode de préparation d'un corps de scintillateur en céramique polycristalline comprenant les étapes de:

préparation d'une poudre à composants multiples comprenant entre 5 et 50 moles pourcent de $Gd_2O_3$, entre 0,02 et 12 moles pourcent d'au moins un activateur en oxyde de terres rares choisi dans le groupe constitué par $Eu_2O_3$, $Nd_2O_3$, $Yb_2O_3$, $Dy_2O_3$, $Tb_2O_3$, et $Pr_2O_3$, au moins un promoteur de transparence choisi dans le groupe constitué par $ThO_2$ en une quantité pouvant aller jusqu'à 0,7 mole pourcent, $ZrO_2$ en une quantité pouvant aller jusqu'à 0,7 mole pourcent et $Ta_2O_5$ en une quantité pouvant aller jusqu'à 0,5 mole pourcent, et au moins un agent de rétablissement du rendement lumineux choisi dans le groupe constitué par CaO et SrO, le reste de cette poudre à composants multiples étant $Y_2O_3$;

pressage de la poudre à composants multiples sous vide à une première température et pression pendant une première période de temps prédéterminée; et

accroissement de cette première température et pression à une seconde température et pression et maintien de cette seconde température et pression pendant une seconde période de temps pour former le corps de scintillateur en céramique polycristalline.

17. Méthode de préparation d'un corps de scintillateur en céramique polycristalline comprenant les étapes de:

préparation d'une poudre à composants multiples comprenant entre 5 et 50 moles pourcent de $Gd_2O_3$, entre 0,02 et 12 moles pourcent d'au moins un activateur en oxyde de terres rares choisi dans le groupe constitué par $Eu_2O_3$, $Nd_2O_3$, $Yb_2O_3$, $Dy_2O_3$, $Tb_2O_3$ et $Pr_2O_3$, au moins un promoteur de transparence choisi dans le groupe constitué par $ThO_2$ en une quantité pouvant aller jusqu'à 0,7 mole pourcent, $ZrO_2$ en une quantité pouvant aller jusqu'à 0,7 mole pourcent et $Ta_2O_5$ en une quantité pouvant aller jusqu'à 0,5 mole pourcent, et au moins un agent de rétablissement du rendement lumineux choisi dans le groupe constitué par CaO et SrO, le reste de cette poudre à composants multiples étant $Y_2O_3$;

pressage à froid de la poudre à composants multiples chauffée pour former un comprimé de poudre; et

frittage du comprimé de poudre pour former le corps de scintillateur en céramique polycristalline.

18. Méthode selon l'une quelconque des revendications 15 à 17 dans laquelle le promoteur de transparence se compose de $ThO_2$ en une quantité comprise entre 0,2 et 0,7 mole pourcent.

19. Méthode selon l'une quelconque des revendications 15 à 17 dans laquelle le promoteur de transparence se compose de $ZrO_2$ en une quantité comprise entre 0,2 et 0,7 mole pourcent.

20. Méthode selon l'une quelconque des revendications 15 à 17 dans laquelle le promoteur de transparence se compose de $Ta_2O_5$ en une quantité comprise entre 0,1 et 0,5 mole pourcent.

21. Méthode selon l'une quelconque des revendications 15 à 17 dans laquelle la poudre à composants multiples comprend entre 20 et 40 moles pourcent de $Gd_2O_3$;

22. Méthode selon l'une quelconque des revendications 15 à 17 dans laquelle la poudre à composants multiples comprend entre 0,2 et 4 moles pourcent de CaO.

23. Méthode selon l'une quelconque des revendications 15 à 17 dans laquelle la poudre à composants multiples comprend entre 1 et 6 moles pourcent de $Eu_2O_3$.

24. Méthode selon l'une quelconque des revendications 15 à 17 dans laquelle la poudre à composants multiples comprend entre 0,05 et 1,5 mole pourcent de $Nd_2O_3$.

25. Méthode selon l'une quelconque des revendications 15 à 17 dans laquelle la poudre à composants multiples comprend entre 0,05 et 3 moles pourcent de $Tb_2O_3$.

26. Méthode selon l'une quelconque des revendications 15 à 17 dans laquelle la poudre à composants multiples comprend entre 0,1 et 2 moles pourcent d'$Yb_2O_3$.

27. Méthode selon l'une quelconque des revendications 15 à 17 dans laquelle la poudre à composants multiples comprend entre 0,03 et 1 mole pourcent de $Dy_2O_3$.

28. Méthode selon l'une quelconque des revendications 15 à 17 dans laquelle la poudre à composants multiples comprend entre 0,02 et 0,05 mole pourcent de $Pr_2O_3$.

29. Méthode selon l'une quelconque des revendications 15 à 17 dans laquelle l'agent de rétablissement du rendement lumineux comprend entre 0,1 et 3 moles pourcent de SrO.

30. Méthode selon l'une quelconque des revendications 15 à 17 dans laquelle l'étape de préparation de la poudre à composants multiples comprend le mélange de poudres micrométriques à sous-micrométriques de haute pureté de $Gd_2O_3$, $Y_2O_3$, au moins un des activateurs en oxyde de terres rares, au moins un des promoteurs de transparence et au moins un des agents de restauration du rendement lumineux.

31. Méthode selon l'une quelconque des revendications 15 à 17 dans laquelle l'étape de préparation de la poudre à composants multiples comprend les étapes de:

coprécipitation par le procédé chimique par voie humide des oxalates de Y, Gd et au moins un des activateurs en oxyde de terres rares;

calcination de ces oxalates afin d'obtenir les oxydes correspondants et;

mélange d'au moins un des promoteurs de transparence et d'au moins un des agents de restauration du rendement lumineux avec les oxydes obtenus dans l'étape de calcination.

32. Méthode selon la revendication 31 dans laquelle l'étape de calcination comprend l'étape de chauffage des oxalates dans l'air à une température de 700°C à 900°C pendant 1 à 4 heures.

33. Méthode selon la revendication 31 dans laquelle l'étape de calcination est précédée par l'étape de broyage des oxalates.

34. Méthode selon l'une quelconque des revendications 31 ou 33 qui comprend en outre l'étape de broyage des oxydes obtenus dans l'étape de calcination.

35. Méthode selon l'une quelconque des revendications 15, 30 ou 31 dans laquelle l'étape de pressage pour former le comprimé de poudre comprend les étapes de:

pressage à froid de la poudre à composants multiples à une pression comprise entre 2,063 daN/mm$^2$ (3.000 psi) et 6,89 daN/mm$^2$ (10 000 psi) pour former un comprimé préliminaire de poudre et ensuite

pressage isostatique du comprimé préliminaire de poudre à une pression comprise entre 10,34 daN/mm$^2$ (15 000 psi) et 41,36 daN/mm$^2$ (60 000 psi) pour en accroître la densité à vert.

36. Méthode selon la revendication 35 dans laquelle l'étape de frittage comprend le chauffage du comprimé de poudre à une température comprise entre 1500°C et 1700°C pendant 1 à 10 heures.

37. Méthode selon la revendication 36 dans laquelle l'étape de pressage du comprimé fritté de poudre par le procédé isostatique à gaz chaud comprend l'étape de chauffage à une température comprise entre 1500°C et 1800°C pendant 1 à 2 heures sous une pression de gaz argon comprise entre 0,689 daN/mm$^2$ (1000 psi) et 20,68 daN/mm$^2$ (30 000 psi).

38. Méthode selon la revendication 37 dans laquelle l'étape de pressage du comprimé fritté de poudre par le procédé isostatique à gaz chaud comprend plus particulièrement les étapes de:

chauffage du comprimé de poudre pendant 1 heure pour en élever la température jusqu'à 1400°C poursuite du chauffage du comprimé de poudre pendant une heure supplémentaire pour en élever la température jusqu'à 1750°C; et ensuite

maintien de la température de ce comprimé de poudre pendant 1 heure à 1750°C avant le refroidissement du comprimé de poudre dans le four jusqu'à la température ambiante, ces étapes de chauffage et de maintien de température étant effectuées sous une pression de gaz argon de 17,225 daN/mm$^2$ (25 000 psi).

39. Méthode selon l'une quelconque des revendications 16, 30 ou 31 dans laquelle l'étape de pressage comprend l'étape de pressage de la poudre à composants multiples à une pression comprise entre 0,689 daN/mm$^2$ (1000 psi) et 0,827 daN/mm$^2$ (1200 psi) à une température comprise entre 600°C et 700°C sous un vide pouvant aller jusquà 200 micromètres pendant un temps pouvant aller jusqu'à 1 heure.

40. Méthode selon la revendication 39 dans laquelle l'étape d'accroissement de la première température et pression comprend l'accroissement de la température entre 1300°C et 1600°C, l'accroissement de la pression entre 2,75 daN/mm$^2$ (4000 psi) et 6,89 daN/mm$^2$ (10 000 psi) et le maintien de cette température et de cette pression accrue pendant une demi-heure à 4 heures.

41. Méthode selon la revendication 40 comprenant en outre l'étape d'oxydation de la céramique pressée à chaud résultante, cette étape d'oxydation incluant le chauffage de la céramique dans une atmosphère contenant de l'oxygène pendant 1 à 20 heures à une température comprise entre 800°C et 1200°C pour ôter toute coloration.

42. Méthode selon l'une quelconque des revendications 17, 30 ou 31 dans laquelle l'étape de pressage à froid comprend l'étape de pressage en matrice de la poudre à composants multiples à une pression comprise entre 2,068 daN/mm$^2$ (3 000 psi) et 10,34 daN/mm$^2$ (15 000 psi).

43. Méthode selon la revendication 42 dans laquelle l'étape de pressage à froid comprend en outre l'étape de pressage isostatique de la poudre à composants multiples pressée en matrice à une pression comprise entre 6,89 daN/mm$^2$ (10 000 psi) et 41,36 daN/mm$^2$ (60 000 psi) pour accroître encore la densité à vert du comprimé de poudre.

44. Méthode selon la revendication 42 dans laquelle l'étape de frittage comprend les étapes de:

chauffage du comprimé de poudre à une vitesse comprise entre 100°C par heure et 700°C par heure jusqu'à une température de frittage comprise entre 1800°C et 2100°C; et

maintien de cette température de frittage entre 1 et 30 heures.

45. Méthode selon la revendication 42 dans laquelle l'étape de frittage comprend les étapes de:

chauffage du comprimé de poudre à une vitesse comprise entre 300°C par heure et 400°C par heure jusqu'à une température de maintien comprise entre 1600°C et 1700°C;

maintien de cette température de maintien de 1 à 20 heures et ensuite accroissement de la température à une vitesse comprise entre 25°C par heure et 75°C par heure jusqu'à une température finale de frittage comprise entre 1800°C et 2100°C; et

maintien de la température finale de frittage pendant 1 à 10 heures.

46, Méthode selon la revendication 44 dans laquelle l'étape de chauffage comprend le chauffage du comprimé de poudre sous vide ou dans une atmosphère réductrice.

47. Méthode selon la revendication 44 comprenant en outre l'étape de refroidissement du corps de scintillateur en céramique polycristalline résultant jusqu'à la température ambiante sur une période comprise entre 2 et 10 heures.

FIG. 1

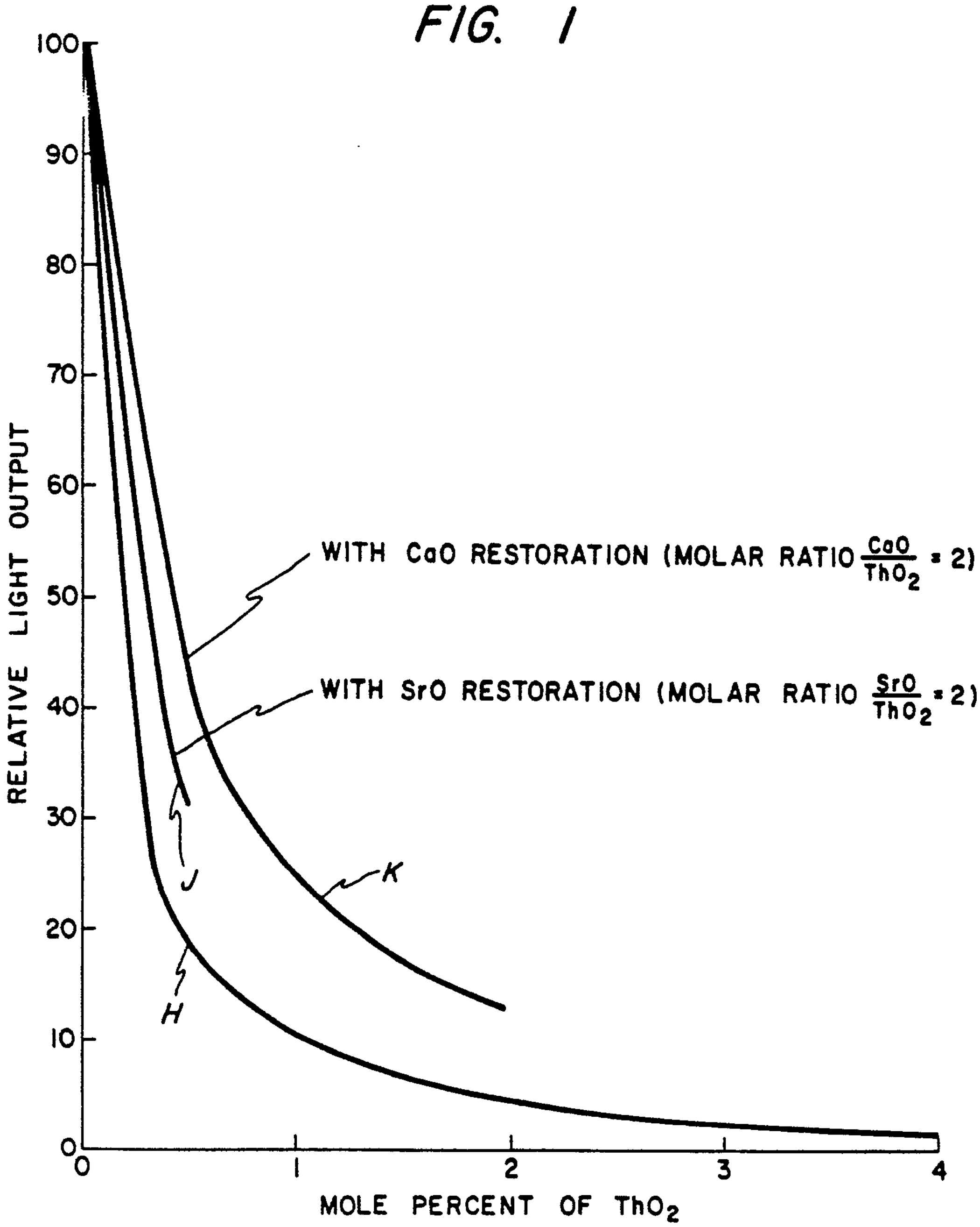

100
90
80
70
60
50
40
30
20
10
0
RELATIVE LIGHT OUTPUT
WITH CaO RESTORATION (MOLAR RATIO CaO/ThO2 = 2)
WITH SrO RESTORATION (MOLAR RATIO SrO/ThO2 = 2)
K
J
H
0
1
2
3
4
MOLE PERCENT OF ThO2

FIG. 2

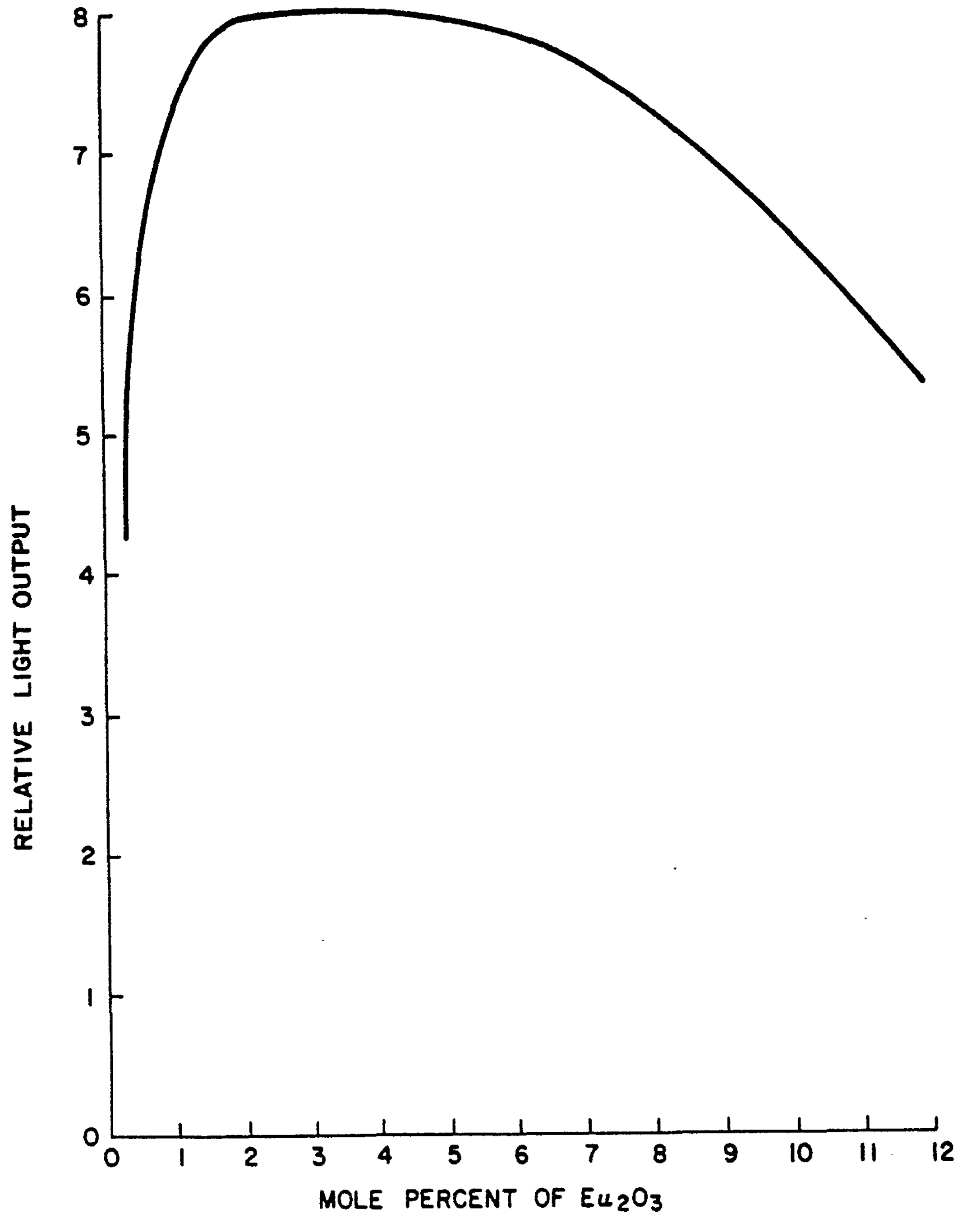
RELATIVE LIGHT OUTPUT
8
7
6
5
4
3
2
1
0
0
1
2
3
4
5
6
7
8
9
10
11
12
MOLE PERCENT OF Eu2O3

FIG. 3a

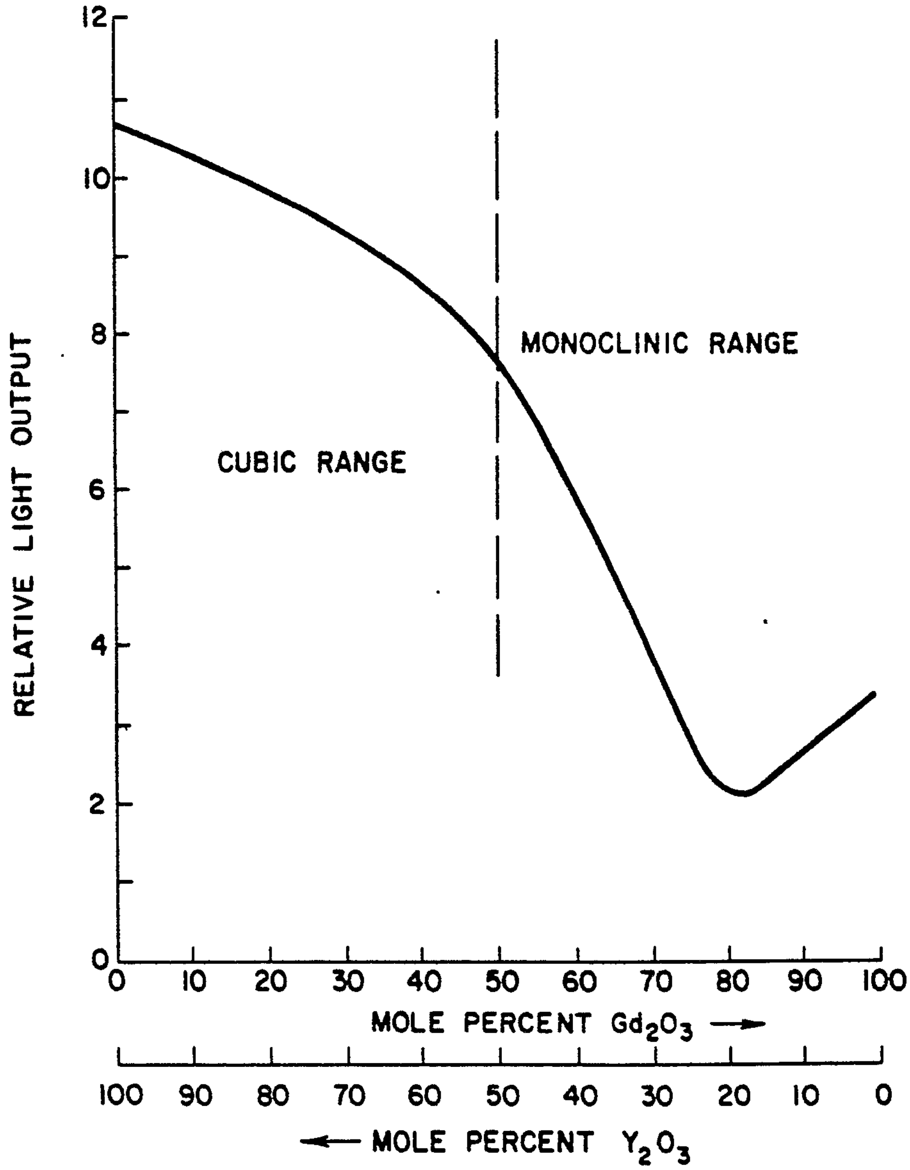
RELATIVE LIGHT OUTPUT
12
10
8
6
4
2
0
MONOCLINIC RANGE
CUBIC RANGE
0 10 20 30 40 50 60 70 80 90 100
MOLE PERCENT $Gd_2O_3$ →
100 90 80 70 60 50 40 30 20 10 0
← MOLE PERCENT $Y_2O_3$

FIG. 3b

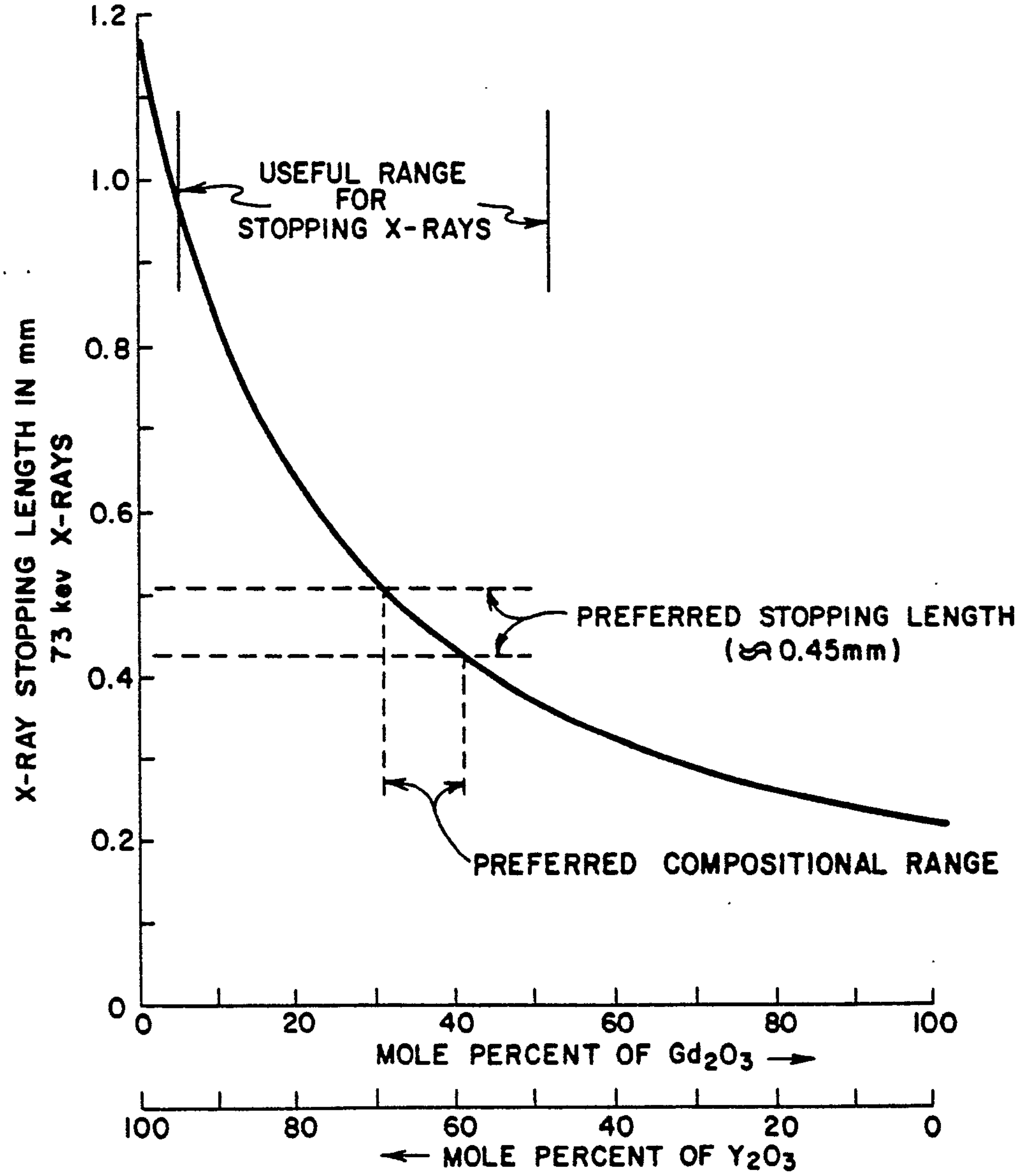
1.2
1.0
0.8
0.6
0.4
0.2
0
X-RAY STOPPING LENGTH IN mm
73 kev X-RAYS
USEFUL RANGE
FOR
STOPPING X-RAYS
PREFERRED STOPPING LENGTH
(≈0.45mm)
PREFERRED COMPOSITIONAL RANGE
0
20
40
60
80
100
MOLE PERCENT OF $Gd_2O_3$
100
80
60
40
20
0
MOLE PERCENT OF $Y_2O_3$

FIG. 4

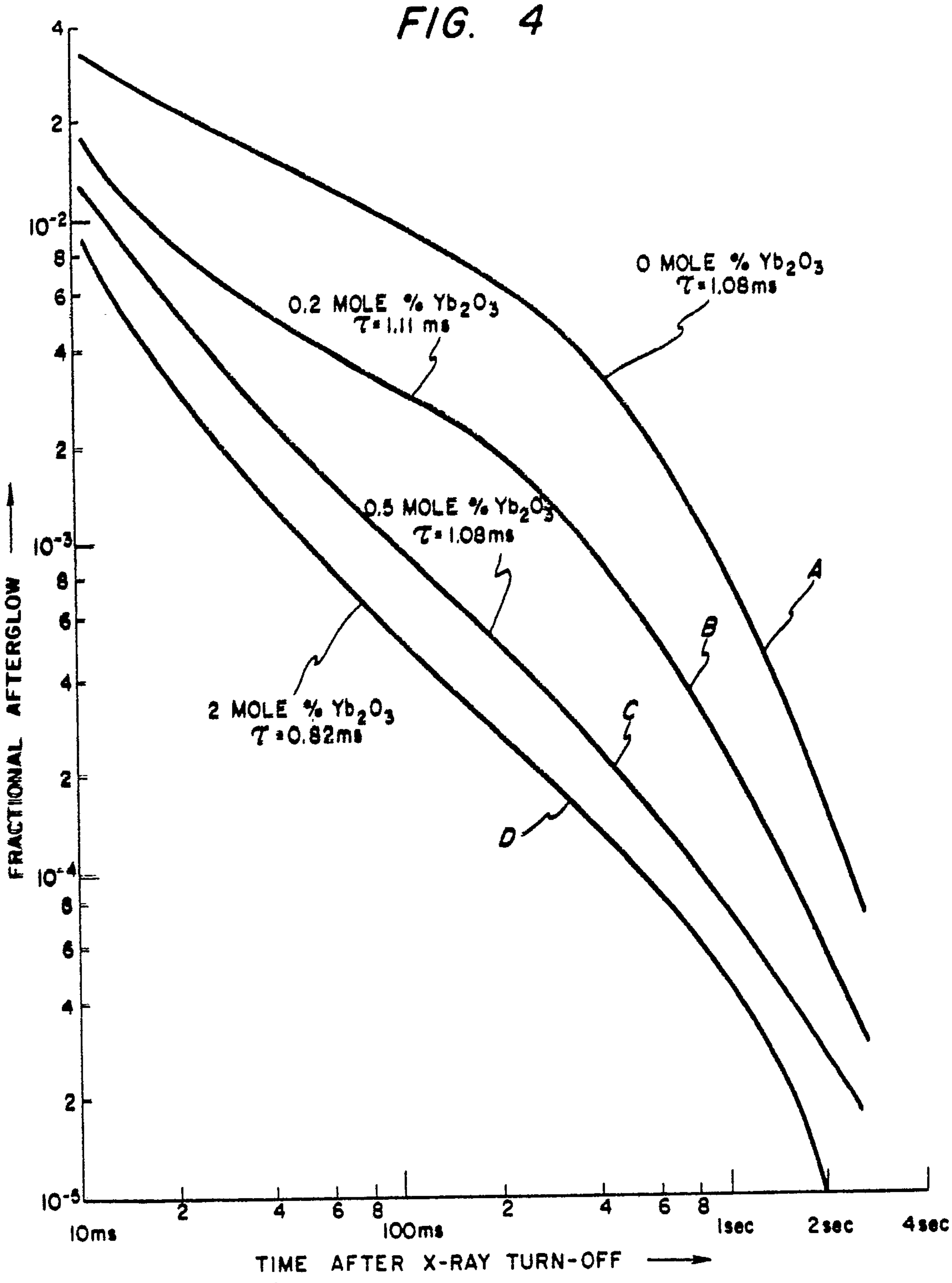

4
2
$10^{-2}$
8
6
4
2
$10^{-3}$
8
6
4
2
$10^{-4}$
8
6
4
2
$10^{-5}$
FRACTIONAL AFTERGLOW
0 MOLE % $Yb_2O_3$
$\tau$ = 1.08ms
0.2 MOLE % $Yb_2O_3$
$\tau$ = 1.11 ms
0.5 MOLE % $Yb_2O_3$
$\tau$ = 1.08ms
2 MOLE % $Yb_2O_3$
$\tau$ = 0.82ms
A
B
C
D
10ms
2
4
6
8
100ms
2
4
6
8
1sec
2sec
4sec
TIME AFTER X-RAY TURN-OFF

FIG. 5

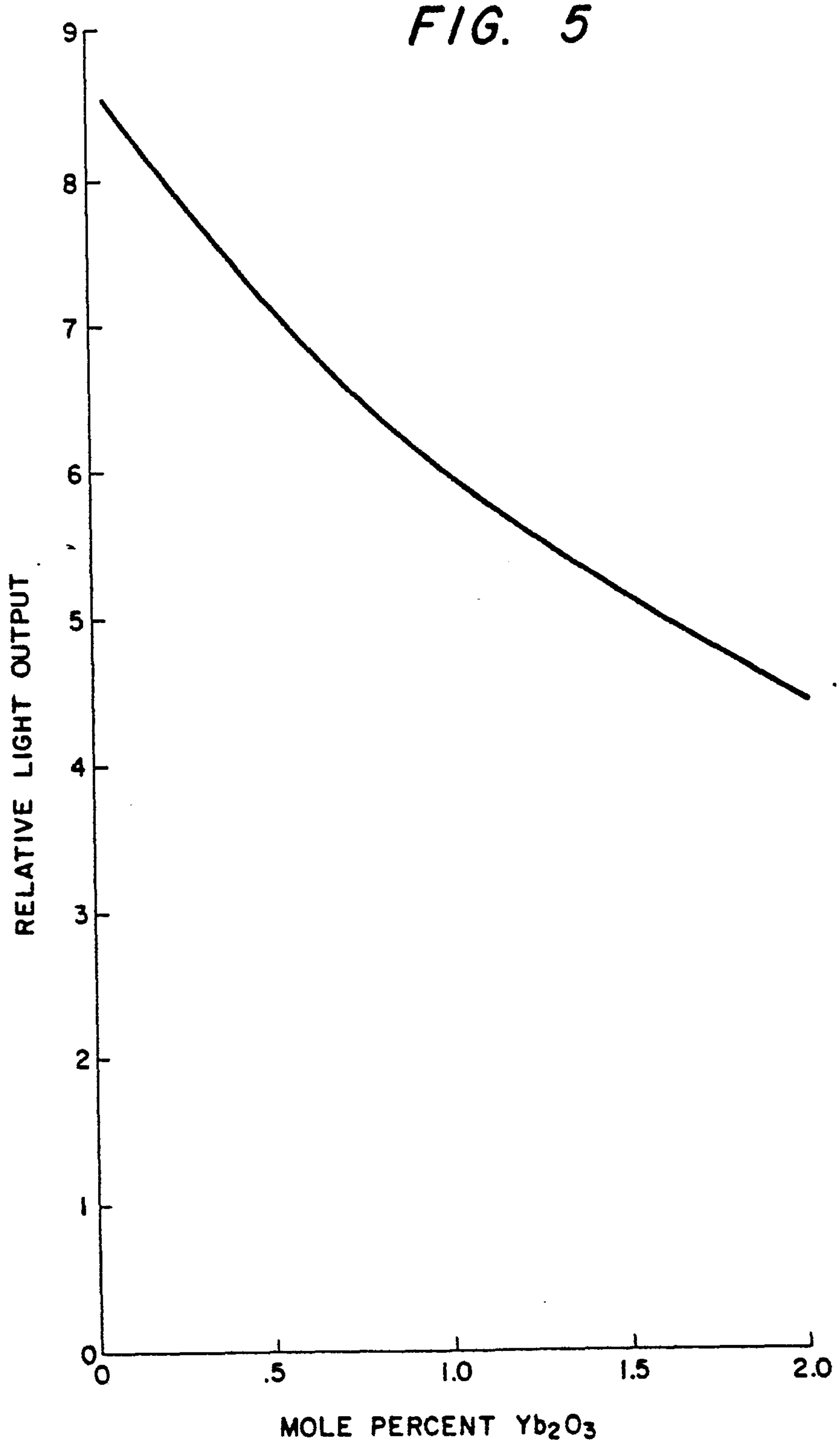
9
8
7
6
5
4
3
2
1
0
RELATIVE LIGHT OUTPUT
0
.5
1.0
1.5
2.0
MOLE PERCENT Yb2O3

FIG. 6

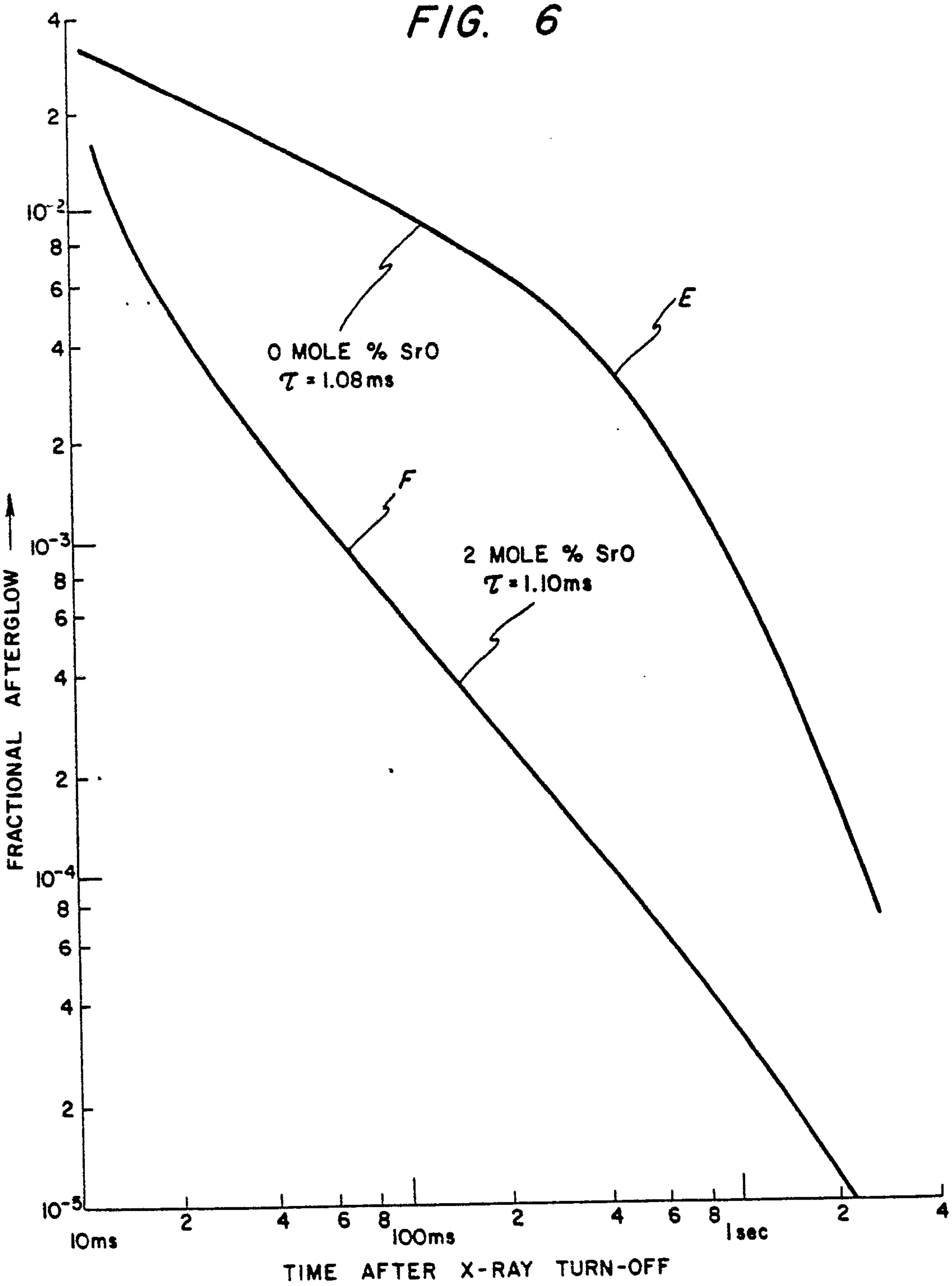
FRACTIONAL AFTERGLOW
4
2
$10^{-2}$
8
6
4
2
$10^{-3}$
8
6
4
2
$10^{-4}$
8
6
4
2
$10^{-5}$
0 MOLE % SrO
τ = 1.08 ms
E
F
2 MOLE % SrO
τ = 1.10 ms
10ms
2
4
6
8
100ms
2
4
6
8
1sec
2
4
TIME AFTER X-RAY TURN-OFF